# EUROPEAN PATENT APPLICATION

(11) **EP 4 671 571 A1**
(43) Date of publication of application: **31.12.2025**
(21) Application number: 24796109.7
(22) Date of filing: 24.04.2024
(51) Int. Cl.: F16H 61/02, F16H 59/66, F16H 59/60, B60W 30/19

(54) **GEAR PROCESSING METHOD AND RELATED DEVICE**

(30) Priority: 26.04.2023 CN 202310478845
(71) Applicant: Huawei Technologies Co., Ltd., Shenzhen, Guangdong 518129 (CN)
(72) Inventor: YANG, Fan, Shenzhen, Guangdong 518129 (CN); LIU, Hao, Shenzhen, Guangdong 518129 (CN); HU, Hongwei, Shenzhen, Guangdong 518129 (CN); ZHOU, Yidan, Shenzhen, Guangdong 518129 (CN); GUO, Zining, Shenzhen, Guangdong 518129 (CN)
(74) Representative: Maiwald GmbH
(86) International application number: PCT/CN2024/089521
(87) International publication number: WO 2024/222732

(57) **Abstract**

A gear processing method and a related apparatus are provided. The method includes: when a first vehicle parameter and a first environmental feature meet a first scenario condition, determining (S101) a first scenario in which a vehicle (100) is located, where the first scenario is any one of a plurality of preset scenarios; determining (S102) passability of the vehicle (100) in a preset direction based on a detected second environmental feature; determining (S103) a predicted gear based on the current scenario and the passability in the preset direction; and performing (S104) a prompt operation when the predicted gear is inconsistent with an actual gear. According to the gear processing method and the related apparatus, a loss caused by gear mis-shift can be effectively avoided, and driving safety can be improved.

## Description

This application claims priority to Chinese Patent Application No. 202310478845.0, filed with the China National Intellectual Property Administration on April 26, 2023 and entitled "GEAR PROCESSING METHOD AND RELATED APPARATUS", which is incorporated herein by reference in its entirety.

### TECHNICAL FIELD

This application relates to the field of electronic technologies, and in particular, to a gear processing method and a related apparatus.

### BACKGROUND

With development of the automobile industry, there are an increasing quantity of vehicle users, and private vehicles become an important transportation means for people's daily travel. According to user survey statistics, a high proportion of users have experienced gear mis-shift during actual vehicle use. The gear mis-shift may cause a traffic accident, and affect driving safety of the users. How to handle the gear mis-shift of the users, avoid a loss caused by the gear mis-shift, and improve the driving safety is still to be studied.

### SUMMARY

This application provides a gear processing method and a related apparatus, so that gear mis-shift is detected in real time through intelligent gear prediction, and a user is prompted in a timely manner when the gear mis-shift is detected. Therefore, a loss caused by the gear mis-shift is avoided in a timely manner, and driving safety is improved.

According to a first aspect, this application provides a gear processing method, including: when a first vehicle parameter and a first environmental feature meet a first scenario condition, determining a first scenario in which a vehicle is located, where the first scenario is any one of a plurality of preset scenarios; determining passability of the vehicle in a preset direction based on a detected second environmental feature; determining a predicted gear based on the current scenario and the passability in the preset direction; and performing a prompt operation when the predicted gear is inconsistent with an actual gear.

During implementation of this embodiment of this application, gear mis-shift is detected in real time through intelligent gear prediction, and a user is prompted in a timely manner when the gear mis-shift is detected. Therefore, a loss caused by the gear mis-shift is avoided in a timely manner, and driving safety is improved.

In an implementation, after determining that the predicted gear is inconsistent with the actual gear, the method further includes: performing an intervention operation. In this way, when the gear mis-shift is detected, intervention is performed in a timely manner, so that the loss caused by the gear mis-shift is avoided in a timely manner, and the driving safety is improved.

In an implementation, the first vehicle parameter includes a driving status of the vehicle, and before determining the first scenario in which the vehicle is located, the method further includes: determining the driving status of the vehicle based on first vehicle information. The first vehicle information includes a first speed and a first traveling distance of the vehicle, the first speed is a maximum speed of the vehicle after a latest gear shift from a P gear to another gear, and the first traveling distance is a traveling distance of the vehicle after the latest gear shift from the P gear to the another gear. During implementation of this embodiment of this application, a plurality of scenarios may be obtained through subdivision for different driving statuses, to effectively cover gear prediction in more scenarios, and further improve gear prediction accuracy.

In an implementation, determining the driving status of the vehicle based on the first vehicle information includes: when the first speed is less than a first speed threshold and/or the first traveling distance is less than a first distance threshold, the driving status of the vehicle is a starting state.

In an implementation, the plurality of scenarios include a part or all of a scenario of starting with a height difference, a scenario of starting from a parking space, a scenario of maneuvering to start, a traffic-light vehicle following scenario, a closed-road section vehicle following scenario, and a narrow-road meeting scenario. The first vehicle parameter includes a part or all of the following: a driving status of the vehicle, a location of the vehicle, and a speed of the vehicle. The first environmental feature includes a characteristic of an obstacle around the vehicle, where the characteristic of the obstacle includes a part or all of the following: an orientation of the obstacle, a distance of the obstacle, a speed/relative speed of the obstacle, whether the obstacle is a height-difference obstacle, and a location of the obstacle. During implementation of this embodiment of this application, a plurality of scenarios may be accurately obtained through subdivision with reference to various vehicle parameters and various characteristics of the surrounding obstacle, to effectively cover gear prediction in more scenarios, and improve gear prediction accuracy.

In an implementation, the preset direction includes front and rear, and the second environmental feature includes a location of an obstacle in the preset direction of the vehicle. Determining the passability of the vehicle in the preset direction based on the detected second environmental feature includes: determining a minimum turning radius and a turning center of the vehicle; determining a minimum distance between an obstacle in a first preset direction and the turning center based on a location of the obstacle, where the first preset direction is front or rear; and when the minimum distance is less than the minimum turning radius, the first preset direction is impassable; or when the minimum distance is greater than or equal to the minimum turning radius, the first preset direction is passable. During implementation of this embodiment of this application, passability in front of the vehicle and passability in rear of the vehicle may be accurately identified with reference with a vehicle parameter and a characteristic of a surrounding obstacle, so that gear prediction accuracy is further improved.

In an implementation, a first correspondence between different values of a plurality of decision parameters and gears is preset, and the plurality of decision parameters include the current scenario and the passability in the preset direction; and determining the predicted gear based on the current scenario and the passability in the preset direction includes: after values of the plurality of decision parameters are determined, determining, based on the first correspondence, a gear corresponding to the values of the plurality of decision parameters as the predicted gear. During implementation of this embodiment of this application, the plurality of decision parameters (for example, the current scenario and passability in the preset direction) may be comprehensively considered for gear prediction, so that gear prediction accuracy is effectively improved.

In an implementation, a plurality of decision parameters further include a part or all of the following: a movement characteristic of a nearest obstacle within a seventh distance in the preset direction, and whether there is a height-difference obstacle within/outside a second distance in the preset direction. During implementation of this embodiment of this application, the plurality of decision parameters may be comprehensively considered for gear prediction, so that gear prediction accuracy is effectively improved.

In an implementation, a second correspondence between different values of a plurality of first decision parameters and first gears is preset, the plurality of first decision parameters include a part or all of the following: the current scenario, the passability in the preset direction, a movement characteristic of a nearest obstacle within a seventh distance in the preset direction, and whether there is a height-difference obstacle within/outside a second distance in the preset direction, and the first gear includes a gear for moving forward or a gear for reversing. Determining the predicted gear based on the current scenario and the passability in the preset direction includes: after values of the plurality of first decision parameters are determined, determining the first gear based on the first correspondence; and when the first gear is the gear for reversing, the predicted gear is an R gear; or when the first gear is the gear for moving forward, determining the predicted gear based on one or more second decision parameters. During implementation of this embodiment of this application, whether a gear suitable for the current scenario is used for moving forward or reversing is first predicted. When the gear is used for moving forward, a specific gear for moving forward is specifically distinguished. In this way, gear prediction accuracy is effectively improved.

In an implementation, the one or more second decision parameters include a part or all of the following: a slope of a road surface on which the vehicle is located, a length of a ramp whose slope is within a first slope range, whether a road surface in front is slippery, and whether traffic congestion occurs at a current location of the vehicle, and the gear for moving forward includes a D gear, an S gear, and an L gear. Determining the predicted gear based on the one or more second decision parameters includes: when the slope is within the first slope range and the length of the ramp is less than or equal to a first value, determining that the predicted gear is the S gear; when the slope is within the first slope range and the length of the ramp is greater than a first value, or when the slope of the road surface on which the vehicle is located is within a second slope range, determining that the predicted gear is the L gear; when the road surface on which the vehicle is located is a slippery road surface, determining that the predicted gear is the S gear or the L gear; when traffic congestion occurs, determining that the predicted gear is the L gear; or in another case, determining that the predicted gear is the D gear, where a slope within the second slope range is greater than a slope within the first slope range. During implementation of this embodiment of this application, when it is predicted that a gear suitable for the current scenario is used for moving forward, a specific gear for moving forward is specifically distinguished. In this way, gear prediction accuracy is effectively improved.

In an implementation, performing the prompt operation includes: outputting first audio by using a sound output apparatus, and/or displaying prompt information through a vehicle-mounted display. The first audio and the prompt information are used to prompt for one or more of the following information: the predicted gear, inconsistence between the predicted gear and the actual gear, a current risk of gear mis-shift, a traveling direction corresponding to the actual gear, and the like. During implementation of this embodiment of this application, when it is predicted that there is the risk of gear mis-shift, a user is reminded in a timely manner, so that the loss caused by the gear mis-shift is avoided in a timely manner, and the driving safety is improved.

In an implementation, performing an intervention operation includes one or more of the following: controlling the vehicle to decelerate, controlling the vehicle to perform braking, controlling the vehicle to automatically shift the gear to the predicted gear, controlling the vehicle to decelerate and then automatically shift the gear to a P gear/an N gear, increasing stepping resistance of an accelerator pedal, reducing an extent to which stepping on the accelerator pedal increases a speed of the vehicle, and controlling the accelerator pedal to be unable to be stepped on. During implementation of this embodiment of this application, after it is predicted that there is a risk of gear mis-shift, intervention is performed, so that the loss caused by the gear mis-shift is avoided in a timely manner, and the driving safety is improved.

In an implementation, performing an intervention operation when the predicted gear is inconsistent with the actual gear includes: after performing the prompt operation, if detecting that a driver behavior meets a first behavior condition, performing the intervention operation. During implementation of this embodiment of this application, whether to perform the intervention operation may be determined with reference to the driver behavior, to prevent the intervention operation from not satisfying a driver intention and leading to poor use experience.

In an implementation, the predicted gear includes a plurality of gears for moving forward and a gear for reversing. Performing an intervention operation includes: when a traveling direction corresponding to the predicted gear is inconsistent with that corresponding to the actual gear, after performing the prompt operation, if detecting that a driver behavior meets a first behavior condition, determining to perform the intervention operation. During implementation of this embodiment of this application, whether to perform the intervention operation may be determined with reference to the driver behavior, to prevent the intervention operation from not satisfying a driver intention and leading to poor use experience.

In an implementation, the first behavior condition includes: Within fourth preset duration after the prompt information is displayed, a line of sight of a driver gazes at a display area of the prompt information and/or a driver shifts a gear.

In an implementation, the second environmental feature includes a distance of an obstacle in the preset direction of the vehicle, and the preset direction includes front and rear. Determining the passability of the vehicle in the preset direction based on the detected second environmental feature includes: when there is no obstacle within a sixth distance in a first preset direction, determining that the first preset direction is passable, where the first preset direction is front or rear; or when there is an obstacle within the sixth distance in the first preset direction, determining a minimum distance of the obstacle in the first preset direction. When the minimum distance is less than a safe distance threshold, the first preset direction is impassable, or when the minimum distance is greater than or equal to the safe distance threshold, the first preset direction is passable.

In an implementation, the first scenario is the scenario of starting with a height difference, the first vehicle parameter includes the driving status of the vehicle, the first environmental feature includes the distance of the obstacle around the vehicle, the orientation of the obstacle, and whether the obstacle is a height-difference obstacle, and the orientation of the obstacle indicates whether the obstacle is located in front of or in rear of the vehicle. The first scenario condition includes: The driving status is a starting state, and there is a height-difference obstacle within a second distance in front of and in rear of the vehicle.

In an implementation, the first scenario is the scenario of starting from a parking space, the first vehicle parameter includes the driving status of the vehicle, the first environmental feature includes the distance of the obstacle around the vehicle, the orientation of the obstacle, and whether the obstacle is a height-difference obstacle, and the orientation of the obstacle indicates whether the obstacle is located in front of or in rear of the vehicle. The first scenario condition includes: The driving status is a starting state, there is no height-difference obstacle within a second distance in front of and in rear of the vehicle, and there is no obstacle within a third distance in front of or in rear of the vehicle.

In an implementation, the first scenario is the scenario of maneuvering to start, the first vehicle parameter includes the driving status of the vehicle, the first environmental feature includes the distance of the obstacle around the vehicle, the orientation of the obstacle, and whether the obstacle is a height-difference obstacle, and the orientation of the obstacle indicates whether the obstacle is located in front of or in rear of the vehicle. The first scenario condition includes: The driving status is a starting state, there is no height-difference obstacle within a second distance in front of and in rear of the vehicle, and there is an obstacle within a third distance in both the front and the rear of the vehicle.

In an implementation, the first scenario is the traffic-light vehicle following scenario, the first vehicle parameter includes the driving status of the vehicle, the first environmental feature includes the orientation of the obstacle, the distance of the obstacle, and a type of the obstacle, and the orientation of the obstacle indicates whether the obstacle is located in front of or in rear of the vehicle. The first scenario condition includes: The driving status is not a starting state, and there is a traffic light/crosswalk within a fourth distance in front of or in rear of the vehicle.

In an implementation, the first scenario is a narrow-road meeting scenario, the first vehicle parameter includes the driving status of the vehicle, the first environmental feature includes a part or all of the following: the orientation of the obstacle, the distance of the obstacle, a type of the obstacle, and the speed/relative speed of the obstacle, the orientation of the obstacle indicates whether the obstacle is located in front of or in rear of the vehicle, the orientation of the obstacle and the distance of the obstacle indicate whether the obstacle is located in a straight-line area in front of the vehicle, and the speed/relative speed of the obstacle indicates whether the obstacle and the vehicle move in reverse directions. The first scenario condition includes: The driving status is not a starting state, there is no traffic light/crosswalk within a fourth distance in front of and in rear of the vehicle, there is a first obstacle within a fifth distance of the straight-line area in front of the vehicle body, and the first obstacle and the vehicle move in reverse directions.

In an implementation, the first scenario is a closed-road section vehicle following scenario, the first vehicle parameter includes the driving status of the vehicle, the first environmental feature includes a part or all of the following: the orientation of the obstacle, the distance of the obstacle, a type of the obstacle, and the speed/relative speed of the obstacle, the orientation of the obstacle indicates whether the obstacle is located in front of or in rear of the vehicle, the orientation of the obstacle and the distance of the obstacle indicate whether the obstacle is located in a straight-line area in front of the vehicle, and the speed/relative speed of the obstacle indicates whether the obstacle and the vehicle move in reverse directions. The first scenario condition includes: The driving status is not a starting state, there is no traffic light/crosswalk within a fourth distance in front of and in rear of the vehicle, and there is no obstacle within a fifth distance of the straight-line area in front of the vehicle body, or there is a first obstacle within a fifth distance of the straight-line area in front of the vehicle body and the first obstacle and the vehicle move in a same direction.

According to a second aspect, this application provides a gear processing apparatus, including one or more processors and one or more memories. The one or more memories are coupled to the one or more processors. The one or more memories are configured to store computer program code. The computer program code includes computer instructions. When the one or more processors execute the computer instructions, the communication apparatus is enabled to perform the gear processing method according to any one of the possible implementations of the first aspect.

According to a third aspect, an embodiment of this application provides a computer storage medium, including computer instructions. When the computer instructions are run on an electronic device, the communication apparatus is enabled to perform the gear processing method according to any one of the possible implementations of the first aspect.

According to a fourth aspect, an embodiment of this application provides a computer program product. When the computer program product runs on a computer, the computer is enabled to perform the gear processing method according to any one of the possible implementations of any one of the foregoing aspects.

### BRIEF DESCRIPTION OF DRAWINGS

FIG. 1A is a diagram of a structure of a vehicle according to an embodiment of this application;
FIG. 1B-1 and FIG. 1B-2 are a diagram of a vehicle-mounted display according to an embodiment of this application;
FIG. 2A is a diagram of a gear processing system according to an embodiment of this application;
FIG. 2B is a diagram of a gear prediction module according to an embodiment of this application;
FIG. 3 is a schematic flowchart of a gear processing method according to an embodiment of this application;
FIG. 4A to FIG. 4C are a schematic flowchart of scenario identification according to an embodiment of this application;
FIG. 5A is a diagram of an azimuth according to an embodiment of this application;
FIG. 5B is a diagram of a vehicle coordinate system according to an embodiment of this application;
FIG. 6A and FIG. 6B are diagrams of straight-line areas according to an embodiment of this application;
FIG. 7A and FIG. 7B are diagrams of bounding boxes according to an embodiment of this application;
FIG. 8A to FIG. 8C show user interfaces related to a prompt operation according to an embodiment of this application; and
FIG. 9 is a schematic flowchart of performing a prompt operation and/or an intervention operation according to an embodiment of this application.

### DESCRIPTION OF EMBODIMENTS

The following clearly and completely describes the technical solutions according to embodiments of this application with reference to the accompanying drawings. In descriptions of embodiments of this application, unless otherwise specified, "/" indicates "or". For example, A/B may indicate A or B. The term "and/or" in this specification merely describes an association relationship between associated objects, and indicates that three relationships may exist. For example, A and/or B may indicate the following three cases: Only A exists, both A and B exist, and only B exists. In addition, in the descriptions of embodiments of this application, "a plurality of" means two or more.

The following terms "first" and "second" are merely intended for a purpose of description, and shall not be understood as an indication or implication of relative importance or implicit indication of a quantity of indicated technical features. Therefore, a feature limited by "first" or "second" may explicitly or implicitly include one or more features. In the descriptions of embodiments of this application, unless otherwise specified, "a plurality of" means two or more.

The term "user interface (user interface, UI)" in the following embodiments of this application is a medium interface for interaction and information exchange between an application or an operating system and a user, and implements conversion between an internal form of information and a form acceptable to the user. The user interface is source code written in a specific computer language, for example, Java or an extensible markup language (extensible markup language, XML). Interface source code is parsed and rendered on an electronic device, and is finally presented as content that can be identified by the user. The user interface is usually represented in a form of graphical user interface (graphical user interface, GUI), which is a user interface that is displayed in a graphic manner and that is related to a computer operation. The user interface may be a visual interface element, for example, a text, an icon, a button, a menu, a tab, a text box, a dialog box, a status bar, a navigation bar, or a widget that is displayed on a display of the electronic device.

The following describes a vehicle gear in embodiments of this application.

The vehicle gear is used to control power performance of a vehicle engine. Generally, the vehicle gear includes a neutral gear (namely, an N gear), a park gear (namely, a P gear), a reverse gear (namely, an R gear), and a drive gear (namely, a D gear). With development of vehicle technologies, vehicle gears of some vehicles may further include but are not limited to gears such as a low gear (namely, an L gear) and a sport mode (namely, an S gear).

The P gear is used during parking. In the P gear, a vehicle locks a rotating portion of the vehicle by using a mechanical apparatus. In this case, wheels are in a mechanically locked state to prevent the vehicle from sliding.

The N gear is used during starting, towing, or temporary parking. With a lever in the "N" gear, power between an engine and a transmission is disconnected. Generally, the vehicle can start the engine only in the "P" gear or the "N" gear.

The R gear is used during reversing. The vehicle should not be forcibly shifted to the "R" gear until the vehicle is stopped; or otherwise, a transmission is damaged.

The D gear is used during normal traveling. Generally, when an automatic transmission vehicle is in the D gear, a gearbox may be automatically shifted between a 1^{st} gear to a 4^{th} gear based on speed and accelerator conditions.

In the S gear, a vehicle gear may be limited to be shifted only at a low gear (for example, between a 1^{st} gear and a 2^{nd} gear), to ensure that a vehicle obtains maximum forward power. The S gear is applicable to be used as a limiting gear on slippery road surfaces and short downhill roads or ramps with low inclination or during low-speed forward movement.

The L gear is also a low drive gear, and is applicable to slippery road surfaces, roads with traffic congestion, and long downhill roads or steep ramps. The L gear is used, so that an override gear of a vehicle can be limited at a lowest gear, enabling the vehicle to perform braking by using power of an engine when traveling downhill.

The foregoing descriptions of the gears are merely examples for description, and shall not constitute a limitation on this application. During actual product application, each gear may have fewer or more functions.

During actual vehicle use, gear mis-shift may occur due to various emergencies. For example, the gear mis-shift includes but is not limited to the following cases: When a driver actively shifts a gear, gear mis-shift occurs due to a determining error; or a gear is inappropriate because a driver does not shift the gear in a timely manner in an emergency case. Generally, the driver may need to shift the gear in a timely manner when starting from a parking space, parking in a parking space, meeting a vehicle at a short distance, following a vehicle closely, waiting at a traffic light, encountering a specific obstacle, or the like. The gear mis-shift may cause a traffic accident, and affect driving safety of the user.

Embodiments of this application provide a gear processing solution, so that scenarios can be classified with reference to information about an environment (for example, a characteristic of an obstacle) around a vehicle body and vehicle information (for example, a driving status). In a sub-scenario, an optimal gear is predicted with reference to a feature of an ambient environment and passability in a preset direction. When an actual gear selected by a user is inconsistent with the predicted gear, a prompt operation and/or an intervention operation are performed. In this way, a hazard caused by the gear mis-shift can be avoided in a timely manner, driving safety can be improved, and user experience can be improved. The following describes specific implementation of the method in detail.

A vehicle 100 described in embodiments of this application may be an internal combustion engine vehicle using an engine as a power source, a hybrid electric vehicle using an engine and an electric motor as a power source, an electric vehicle using an electric motor as a power source, or another type of vehicle, for example, a car, a sport utility vehicle (sport utility vehicle, SUV), a bus, a truck, or another land transport apparatus including a cargo vehicle or a passenger vehicle. A vehicle type of the vehicle 100 is not specifically limited in this embodiment of this application.

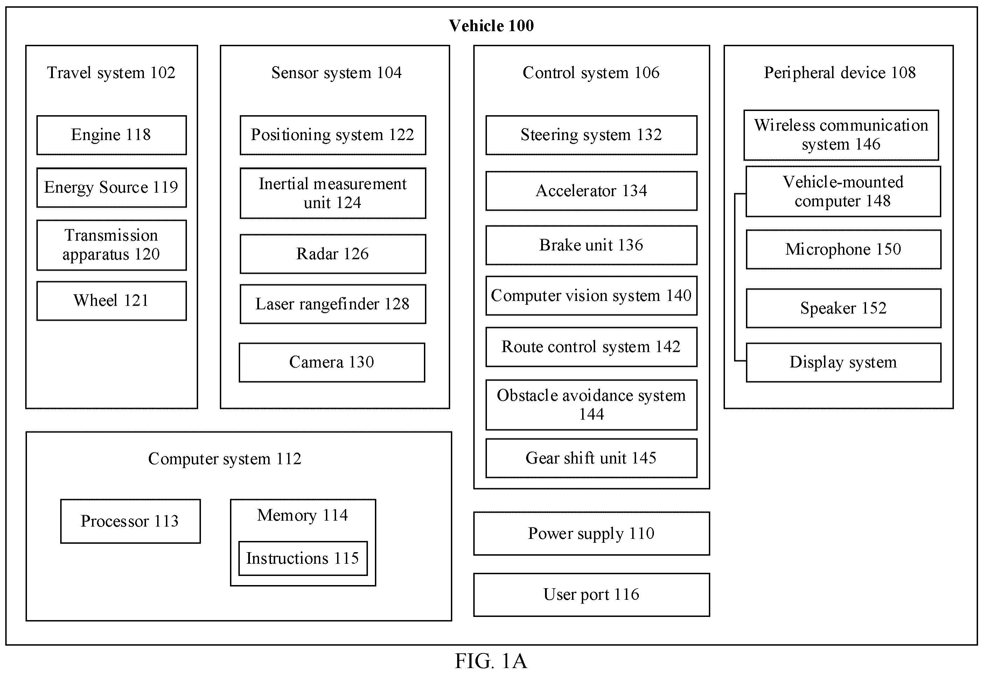

For ease of understanding, a structure of the vehicle 100 is first described. For example, FIG. 1A is a diagram of a structure of a vehicle according to an embodiment of this application.

The vehicle 100 may include various subsystems, for example, a travel system 102, a sensor system 104, a control system 106, one or more peripheral devices 108, a power supply 110, a computer system 112, and a user port 116. Optionally, the vehicle 100 may include more or fewer subsystems, and each subsystem may include a plurality of components. In addition, subsystems and components of the vehicle 100 may be connected to each other in a wired or wireless manner.

The travel system 102 may include a component that provides power for the vehicle 100 to move. In an embodiment, the travel system 102 may include an engine 118, an energy source 119, a transmission apparatus 120, and a wheel 121.

The engine 118 may be an internal combustion engine, an electric motor, an air compression engine, or a combination of other types of engines, for example, a hybrid engine including a gasoline engine and an electric motor, or a hybrid engine including an internal combustion engine and an air compression engine. The engine 118 converts the energy source 119 into mechanical energy. Examples of the energy source 119 include gasoline, diesel, another petroleum-based fuel, propane, another compressed gas-based fuel, ethanol, a solar panel, a battery, and another power source. The energy source 119 may also provide energy for another system of the vehicle 100. The transmission apparatus 120 may transmit mechanical power from the engine 118 to the wheel 121. The transmission apparatus 120 may include a gearbox, a differential, and a drive shaft. In an embodiment, the transmission apparatus 120 may further include another component, for example, a clutch. The drive shaft may include one or more shafts that may be coupled to one or more wheels 121.

The sensor system 104 may include several sensors that sense information about an ambient environment of the vehicle 100. For example, the sensor system 104 may include a positioning system 122 (the positioning system 122 may be a global positioning system GPS, a BeiDou system, or another positioning system), an inertial measurement unit (inertial measurement unit, IMU) 124, a radar 126, a laser rangefinder 128, and a camera 130. The sensor system 104 may further include a sensor for obtaining an internal system of the vehicle 100 (for example, a sensor for obtaining air quality in the vehicle, a fuel gauge, or an oil temperature gauge). Sensor data from one or more of these sensors may be used to detect an object and a corresponding characteristic (a location, a shape, a direction, a speed, or the like) of the object. Such detection and identification are key functions of a safe operation of an autonomous vehicle 100.

The positioning system 122 may be configured to estimate a geographical location of the vehicle 100. The IMU 124 is configured to sense location and orientation changes of the vehicle 100 based on inertial acceleration. In an embodiment, the IMU 124 may be a combination of an accelerometer and a gyroscope. The radar 126 may sense an object in the ambient environment of the vehicle 100 by using a radio signal, and may be specifically represented as an ultrasonic radar, a millimeter-wave radar, or a lidar. In some embodiments, in addition to sensing the object, the radar 126 may be further configured to sense a speed and/or a forward direction of the object. The laser rangefinder 128 may sense, by using a laser, an object in an environment in which the vehicle 100 is located. In some embodiments, the laser rangefinder 128 may include one or more laser sources, a laser scanner, one or more detectors, and another system component. The camera 130 may be configured to capture a plurality of images of the ambient environment of the vehicle 100. The camera 130 may be a static camera or a video camera.

The control system 106 controls operations of the vehicle 100 and components of the vehicle 100. The control system 106 may include various components, including a steering system 132, an accelerator 134, a brake unit 136, a computer vision system 140, a route control system 142, an obstacle avoidance system 144, and a gear shift unit 145.

The steering system 132 may be operated to adjust the forward direction of the vehicle 100. For example, in an embodiment, the steering system 132 may be a steering wheel system. The steering system 132 may obtain a rotation angle of a steering wheel, and adjust the forward direction of the vehicle 100 based on the rotation angle. The accelerator 134 is configured to control an operating speed of the engine 118 to further control a speed of the vehicle 100. The brake unit 136 is configured to control the vehicle 100 to decelerate. The brake unit 136 may slow down the wheel 121 by using a friction force. In another embodiment, the brake unit 136 may convert kinetic energy of the wheel 121 into a current. The brake unit 136 may alternatively reduce a rotational speed of the wheel 121 in another form to control the speed of the vehicle 100. The computer vision system 140 may be operated to process and analyze the image captured by the camera 130, to identify the object and/or a feature in the ambient environment of the vehicle 100. The object and/or the feature may include a traffic signal, a road boundary, and an obstacle. The computer vision system 140 may use an object recognition algorithm, a structure from motion (Structure from Motion, SFM) algorithm, video tracking, and another computer vision technology. In some embodiments, the computer vision system 140 may be configured to: draw a map for an environment, track an object, estimate a speed of the object, and the like. The route control system 142 is configured to determine a traveling route and a traveling speed of the vehicle 100. The obstacle avoidance system 144 is configured to: identify, evaluate, and avoid or otherwise bypass the obstacle in the environment of the vehicle 100. The obstacle may be specifically represented as an actual obstacle and a virtual moving object that may collide with the vehicle 100. The gear shift unit 145 may include a physical gear shift apparatus (for example, a gear shift lever or a gear shift button), or may replace a physical gear shift apparatus with a UI interactive gear shift acting on a vehicle-mounted display. In an example, the control system 106 may additionally or alternatively include a component other than those shown and described, or some of the components shown above may be removed.

The vehicle 100 interacts with an external sensor, another vehicle, another computer system, or a user through the peripheral device 108. The peripheral device 108 may include a wireless communication system 146, a vehicle-mounted computer 148, a microphone 150, and/or a speaker 152. In some embodiments, the peripheral device 108 provides a means for a user of the vehicle 100 to interact with the user port 116. For example, the vehicle-mounted computer 148 may provide information for the user of the vehicle 100. The user port 116 may further receive user input by operating the vehicle-mounted computer 148. The vehicle-mounted computer 148 may be operated through a touchscreen. In another case, the peripheral device 108 may provide a means for the vehicle 100 to communicate with another device located in the vehicle. For example, the microphone 150 may receive audio (for example, a voice command or other audio input) from the user of the vehicle 100. Similarly, the speaker 152 may output audio to the user of the vehicle 100. The wireless communication system 146 may communicate with one or more devices directly or through a communication network in a wireless manner. For example, the wireless communication system 146 may use 3G cellular communication, for example, CDMA, EVD0, or GSM/GPRS, 4G cellular communication, for example, LTE, or 5G cellular communication. The wireless communication system 146 may perform communication through a wireless local area network (wireless local area network, WLAN). In some embodiments, the wireless communication system 146 may directly communicate with a device through an infrared link, Bluetooth, or ZigBee, or by using other wireless protocols, such as various vehicle communication systems. For example, the wireless communication system 146 may include one or more dedicated short-range communications (dedicated short-range communications, DSRC) devices, and these devices may include public and/or private data communication between vehicles and/or roadside stations.

The power supply 110 may provide power for various components of the vehicle 100. In an embodiment, the power supply 110 may be a rechargeable lithium-ion or lead-acid battery. One or more battery groups of such a battery may be configured as a power supply to supply power to the various components of the vehicle 100. In some embodiments, the power supply 110 and the energy source 119 may be implemented together, for example, in some pure electric vehicles.

Some or all functions of the vehicle 100 are controlled by the computer system 112. The computer system 112 may include at least one processor 113. The processor 113 executes instructions 115 stored in a non-transient computer-readable medium, for example, a memory 114. The computer system 112 may alternatively be a plurality of computing devices that control an individual component or a subsystem of the vehicle 100 in a distributed manner. The processor 113 may be any conventional processor, for example, a commercially available central processing unit (central processing unit, CPU). Optionally, the processor 113 may be a dedicated device, for example, an application-specific integrated circuit (application-specific integrated circuit, ASIC) or another hardware-based processor. Although FIG. 1A functionally illustrates the processor, the memory, and another component of the computer system 112 in a same block, a person of ordinary skill in the art should understand that the processor or the memory may actually include a plurality of processors or memories that are not stored in a same physical housing. For example, the memory 114 may be a hard disk drive or another storage medium that is located in a housing different from that of the computer system 112. Therefore, a reference to the processor 113 or the memory 114 is understood as a reference to a set of processors or memories that may or may not operate in parallel. A difference from using a single processor to perform the steps described herein is that some components such as a steering component and a deceleration component may each have a processor of the component, and the processor performs only computation related to a component-specific function.

In various aspects described herein, the processor 113 may be located away from the vehicle 100 and communicate with the vehicle 100 in a wireless manner. In another aspect, some processes described herein are performed on the processor 113 disposed inside the vehicle 100, while the other processes, including performing a step necessary for single operation, are performed by a remote processor 113.

In some embodiments, the memory 114 may include the instructions 115 (for example, program logic), and the instructions 115 may be executed by the processor 113 to perform various functions of the vehicle 100, including the functions described above. The memory 114 may also include additional instructions, including instructions to send data to, receive data from, interact with, and/or control one or more of the travel system 102, the sensor system 104, the control system 106, and the peripheral device 108. In addition to the instructions 115, the memory 114 may further store data, for example, road map, route information, vehicle data such as a location, a direction, and a speed of the vehicle, and other information. Such information may be used by the vehicle 100 and the computer system 112 during operation of the vehicle 100 in autonomous, semi-autonomous, and/or manual modes. The user port 116 is configured to provide information for or receive information from the user of the vehicle 100. Optionally, the user port 116 may include one or more input/output devices in a set of peripheral devices 108, for example, the wireless communication system 146, the vehicle-mounted computer 148, the microphone 150, and the speaker 152.

The computer system 112 may control a function of the vehicle 100 based on input received from various subsystems (for example, the travel system 102, the sensor system 104, and the control system 106) and from the user port 116. In some embodiments, the computer system 112 may provide control over many aspects of the vehicle 100 and the subsystems of the vehicle 100. For example, the computer system 112 predicts an optimal gear suitable for a current scenario, and when the predicted gear is inconsistent with an actual gear, controls the vehicle 100 to perform a prompt operation and/or an intervention operation.

In some embodiments, the vehicle 100 or a computing device associated with the vehicle 100 (for example, the computer system 112 or the vehicle-mounted computer 148 in FIG. 1A) may identify a characteristic (for example, a type, a speed, or a distance) of an obstacle around a vehicle body and a driving status of the vehicle, to identify the current scenario in which the vehicle is located and passability of the vehicle, and then predict, based on the current scenario and the passability, the optimal gear suitable for the current scenario.

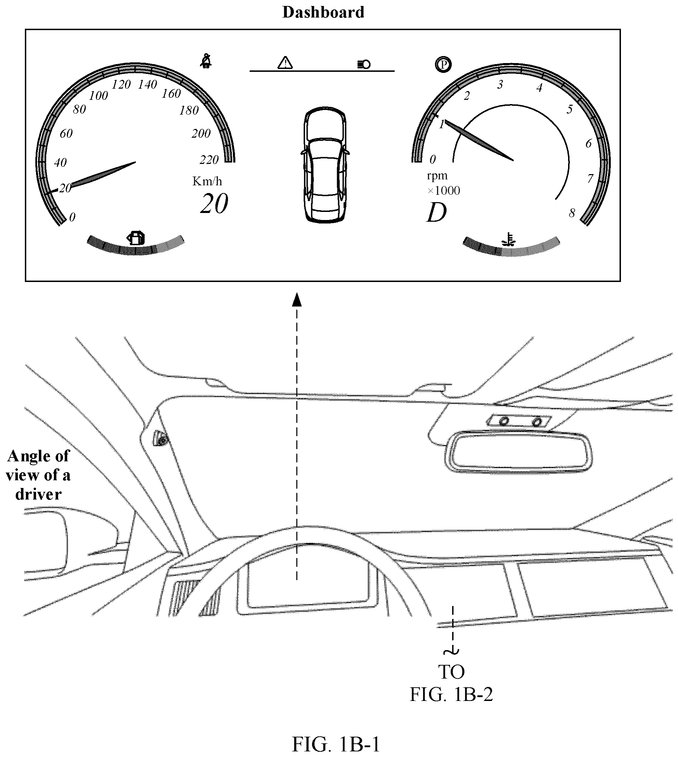

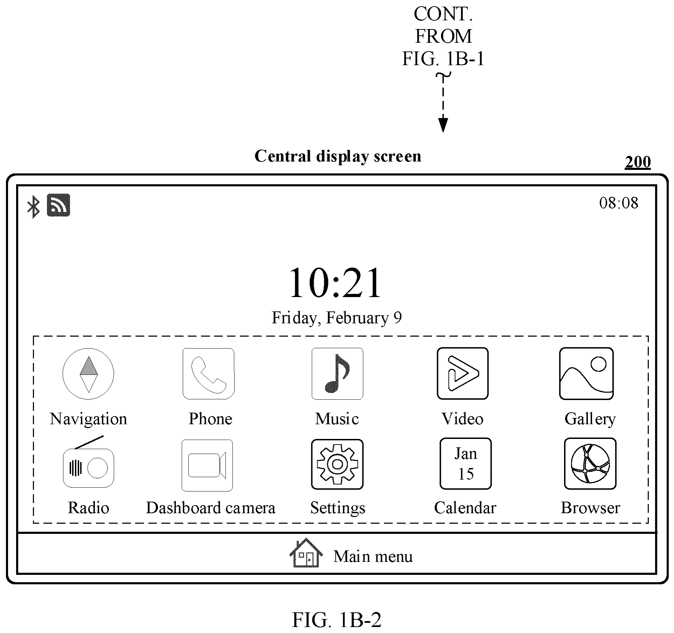

In some embodiments, the vehicle 100 further includes a display system. The display system may include a vehicle-mounted display, and may further include a vehicle-mounted projection device. The vehicle-mounted display includes a part or all of the following: a dashboard, a central display screen, a front passenger screen, a left rear-row screen, and a right rear-row screen, and even a vehicle window may also be used as a display for display. For example, FIG. 1B-1 and FIG. 1B-2 show a dashboard and a central display screen from an angle of view of a driver.

In embodiments of this application, one or more of the foregoing components may be mounted separately from or associated with the vehicle 100. For example, the memory 114 may be partially or completely separated from the vehicle 100. The foregoing components may be communicatively coupled together in a wired and/or wireless manner. Each system (for example, the sensor system 104, the control system 106, or the computer system 112) in the vehicle 100 is a logical concept. In practice, one or more forms of the system may be a physical device, for example, a box, or may be a board or a chip or an area on a board. The foregoing components are merely examples. During actual application, components in the foregoing modules may be added or deleted according to an actual requirement. FIG. 1A should not be understood as a limitation on embodiments of this application.

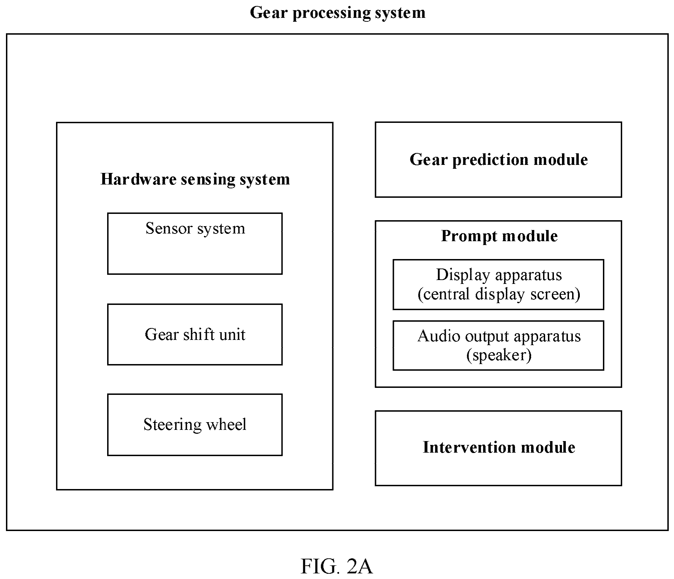

For example, FIG. 2A shows a gear processing system according to an embodiment of this application. The gear processing system includes a hardware sensing system, a gear prediction module, and a display system.

The hardware sensing system includes a sensor system. The sensor system includes sensing components such as a camera module of the foregoing camera 130, the radar 126, the inertial measurement unit 124, the laser rangefinder 128, and the positioning system 122. In some embodiments, the hardware sensing system further includes a steering wheel, and a wheel steering angle may be determined based on a rotation angle of the steering wheel. The wheel steering angle may be used to determine passability of a vehicle in a preset direction. In an implementation, there is a preset correspondence between the rotation angle of the steering wheel and the wheel steering angle. The wheel steering angle may be obtained based on the rotation angle of the steering wheel and the preset correspondence. In some embodiments, when a gear shift unit 145 is a physical gear shift apparatus, the hardware sensing system further includes a gear shift unit, and information output by the gear shift unit may indicate an actual gear of the vehicle.

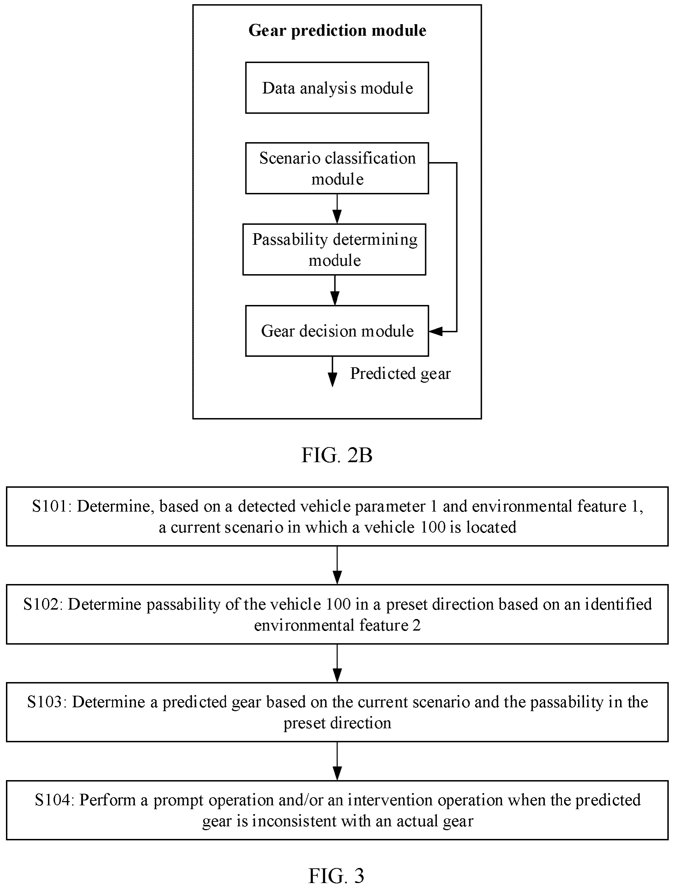

The gear prediction module is configured to predict a gear based on information output by the hardware sensing system. In some embodiments, as shown in FIG. 2B, the gear prediction module includes a data analysis module, a scenario classification module, a passability determining module, and a gear decision module. The data analysis module is configured to obtain, based on the information output by the hardware sensing system, an environmental feature (for example, a characteristic of a surrounding obstacle) and a vehicle parameter (for example, a driving status) that are required for gear prediction. The scenario classification module is configured to determine, based on a driving status of the vehicle and the characteristic of the surrounding obstacle, a current scenario in which the vehicle is located. The passability determining module is configured to determine passability in front and rear directions based on the vehicle parameter (for example, a minimum turning radius) and the characteristic (for example, a minimum distance) of the obstacle. The gear decision module is configured to determine, based on the current scenario and the passability in the preset direction, a predicted gear suitable for the current scenario.

In some embodiments, the information output by the hardware sensing system includes the vehicle information and environment information. The data analysis module determines the required vehicle parameter (for example, the driving status and the minimum turning radius) based on the vehicle information, and determines the required environmental feature (for example, the characteristic of the obstacle around a vehicle body (for example, information such as a type, a distance, or a speed of the obstacle)) based on the environment information. In some embodiments, the environment information includes one or more of the following: an image collected by the camera, radar information collected by the radar, and information about a distance measured by the laser rangefinder. The data analysis module may identify the characteristic of the obstacle around the vehicle body based on the environment information by using a computer vision system. In some embodiments, the vehicle information includes a location, a speed, and acceleration of the vehicle, which may be determined by a global positioning system and/or the inertial measurement unit.

A prompt module is configured to: when the predicted gear is inconsistent with the actual gear, output prompt information by using the foregoing display system and/or audio output apparatus (for example, the speaker 152), to prompt a user with gear mis-shift that may occur.

An intervention module is configured to perform an intervention operation when the predicted gear is inconsistent with the actual gear, to avoid a loss caused by the gear mis-shift. In some embodiments, the intervention module includes a gear shift unit, a brake unit, and an accelerator. The intervention operation includes one or more of the following: controlling the brake unit to decelerate, controlling the brake unit to perform braking, controlling the gear shift unit to shift a gear to the predicted gear, controlling the gear shift unit to shift the gear to a P gear/an N gear, increasing stepping resistance of the accelerator, reducing acceleration of the speed of the vehicle by stepping on an accelerator pedal, and controlling an accelerator pedal to be unable to be stepped on.

The gear processing method provided in embodiments of this application is applied to a gear processing apparatus. The gear processing apparatus includes some or all modules of the vehicle 100 shown in FIG. 1A. For example, FIG. 3 is a schematic flowchart of a gear processing method according to an embodiment of this application.

S101: Determine, based on a detected vehicle parameter 1 and environmental feature 1, a current scenario in which the vehicle 100 is located.

In this embodiment of this application, the vehicle parameter 1 may also be referred to as a first vehicle parameter, and the environmental feature 1 may also be referred to as a first environmental feature.

In some embodiments, a gear is predicted (that is, S101 to S103 are performed) only when a trigger condition 1 is detected. The trigger condition 1 includes: detecting that the vehicle 100 shifts a gear. In some embodiments, after it is detected that the vehicle is started, the gear may be periodically predicted, for example, with a prediction period of 10s. An occasion and a condition for triggering gear prediction are not specifically limited in this application.

In this embodiment of this application, there is a scenario difference in gear prediction logic, and the scenario in which the vehicle 100 is located needs to be determined before the gear prediction. In some embodiments, various scenarios correspond to different scenario conditions, and the gear processing apparatus pre-stores correspondences between the various scenarios and the scenario conditions. For example, a first scenario corresponds to a first scenario condition. When it is detected that the vehicle 100 meets the first scenario condition, it is determined that the vehicle 100 is currently in the first scenario.

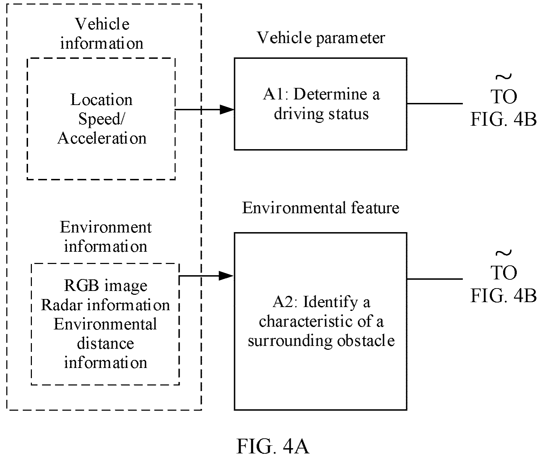

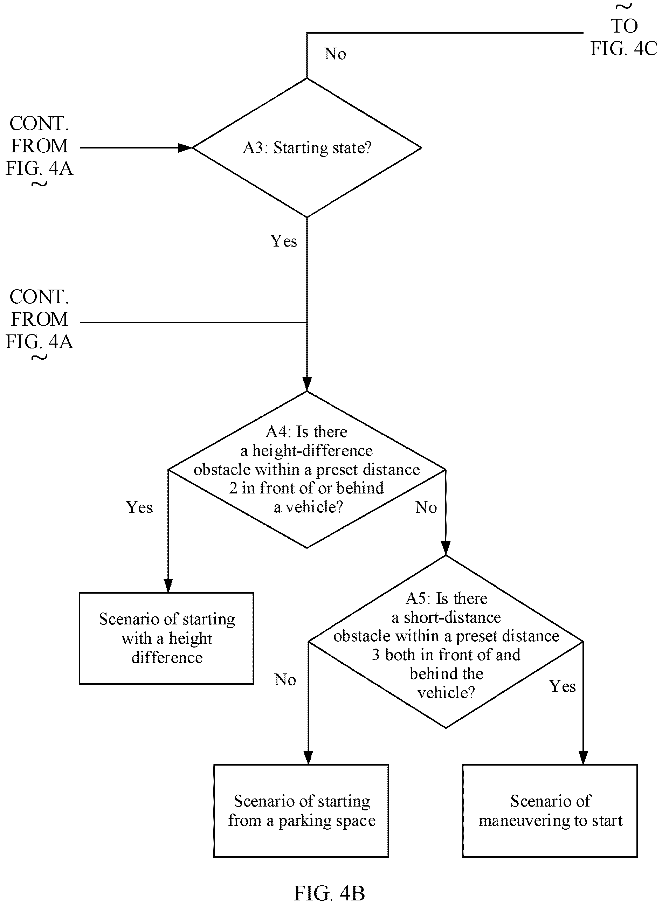

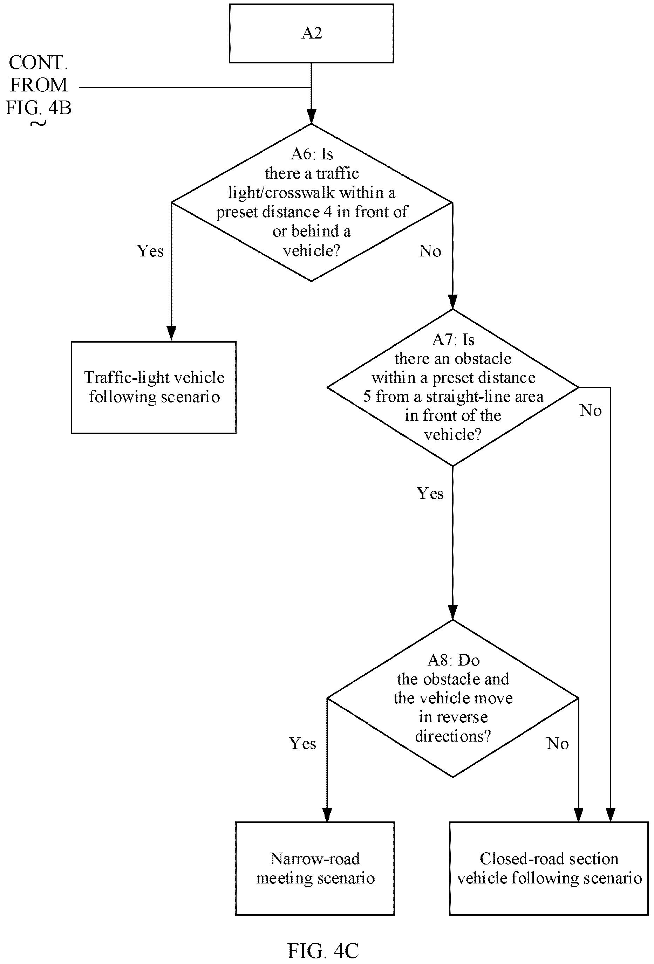

In some embodiments, the vehicle parameter 1 includes a driving status of the vehicle, and the environmental feature 1 includes a characteristic of an obstacle around a vehicle body. Step S101 specifically includes: Determine, based on the driving status of the vehicle and the characteristic of the obstacle around the vehicle body, the current scenario in which the vehicle 100 is located. For example, with reference to a scenario identification procedure shown in FIG. 4A to FIG. 4C, the first scenario in this embodiment of this application includes a part or all of the following: a scenario of starting with a height difference, a scenario of starting from a parking space, a scenario of maneuvering to start, a traffic-light vehicle following scenario, a narrow-road meeting scenario, and a closed-road section vehicle following scenario. Step S101 specifically includes A1 to A8.

A1: Determine the driving status of the vehicle 100 based on detected vehicle information 1.

In this embodiment of this application, the vehicle information 1 may also be referred to as first vehicle information. The driving status of the vehicle may include a starting state and a non-starting state, and the non-starting state may also be referred to as a traveling state. A plurality of scenarios are obtained through subdivision in different driving statuses. In some embodiments, a location and/or a speed of the vehicle 100 may be recorded, and the driving status of the vehicle 100 may be determined based on a historical location change and/or a speed change of the vehicle 100.

In some embodiments, the starting state is a state in which the vehicle starts again after stopping in the P gear. When it is detected that the vehicle 100 shifts from the P gear to another gear, a maximum speed 1 and a traveling distance 1 of the vehicle are recorded. When it is detected that the vehicle 100 shifts to the P gear again, the recorded maximum speed 1 and traveling distance 1 of the vehicle are cleared. In an implementation, the vehicle information 1 includes the maximum speed 1 and the traveling distance 1. Determining the driving status of the vehicle 100 based on the vehicle information 1 includes: when a currently recorded maximum speed 1 is less than a speed threshold 1 and/or a currently recorded traveling distance 1 is less than a distance threshold 1, determining that the vehicle 100 is in the starting state. In an implementation, the vehicle 100 records a previous gear of a current gear, and the vehicle information 1 includes the previous gear of the current gear, the maximum speed 1, and the traveling distance 1. Determining the driving status of the vehicle 100 based on the vehicle information 1 includes: when the previous gear is the P gear, or when the previous gear is not the P gear and a currently recorded maximum speed 1 is less than a speed threshold 1 and/or a currently recorded traveling distance 1 is less than a distance threshold 1, determining that the vehicle 100 is in the starting state.

The maximum speed 1 and the traveling distance 1 are determined based on one or more of a location, a speed, and acceleration of the vehicle that are output by a hardware sensing system. For example, the maximum speed 1 and the traveling distance 1 of the vehicle 100 are continuously updated based on a real-time speed output by an inertial measurement unit. The speed threshold 1 is a low speed suitable for the starting state, and the distance threshold 1 is a short distance suitable for the starting state. For example, the speed threshold 1 is 5 km/h or 10 km/h, and the distance threshold 1 is 10 m or 15 m. The speed threshold 1 and the distance threshold 1 may be preset by a user or the vehicle 100. In this embodiment of this application, the maximum speed 1 may also be referred to as a first speed, and the traveling distance 1 may also be referred to as a first traveling distance. The speed threshold 1 may also be referred to as a first speed threshold, and the distance threshold 1 may also be referred to as a first distance threshold.

In some embodiments, parking is classified into parking in a parking space and temporary parking during vehicle following in a traveling process. A parking location belongs to a preset location (for example, a parking lot or a roadside parking space). When parking duration is greater than preset duration 1 (for example, 120s), this parking is usually parking in a parking space. When parking duration is less than preset duration 1, this parking is usually temporary parking during vehicle following. When the parking location is in a normal travel lane of a road, this parking is usually temporary parking during vehicle following. The vehicle 100 records a historical location of the vehicle 100, and the vehicle information 1 includes the historical location of the vehicle 100, the maximum speed 1, and the traveling distance 1. Determining the driving status of the vehicle 100 based on the vehicle information 1 includes: determining, based on the historical location of the vehicle 100, that a location at which the vehicle 100 is last in the P gear is a location 1; and when that the location 1 belongs to a preset location for parking in a parking space is determined based on a map, duration for which the vehicle is parked in the P gear at the location 1 is greater than the preset duration 1, and the maximum speed 1 is less than the speed threshold 1 and/or the traveling distance 1 is less than the distance threshold 1, determining that the vehicle 100 is in the starting state. It may be understood that, in this embodiment, a state in which the vehicle stops temporarily and then starts again during vehicle following does not belong to the starting state.

A2: Identify the characteristic of the obstacle around the vehicle body based on detected environment information 1.

An environmental feature of the vehicle 100 includes a specific obstacle around the vehicle body and a characteristic of each identified obstacle. The specific obstacle includes a part or all of the following: people, a vehicle (a motor vehicle or a non-motor vehicle), a road facility (for example, a traffic light, a crosswalk, a road shoulder, or a wall), an object, s special natural environment (for example, a river or a lake), and a special road condition (for example, a deep pit or standing water on a road surface). The characteristic of the obstacle may include one or more of the following: a type of the obstacle, whether is a height-difference obstacle, a distance, an orientation relative to the vehicle 100, a speed/a relative speed relative to the vehicle 100, a location (for example, a location indicated by using a bounding box of the obstacle), and the like.

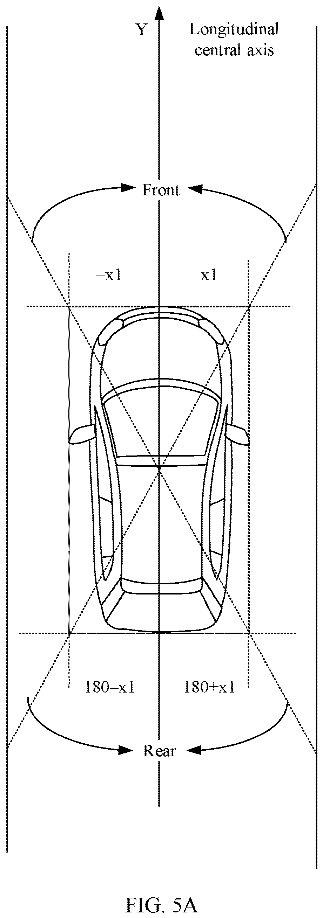

In some embodiments, the orientation of the identified obstacle relative to the vehicle 100 may indicate whether the obstacle is located in front of or in rear of the vehicle. In an implementation, an identified orientation is front, rear, left, or right. In an implementation, the identified orientation includes a specific azimuth, and it may be determined, based on the azimuth, whether the obstacle is located in front of or in rear of the vehicle. In an implementation, the azimuth includes a horizontal angle. Refer to FIG. 5A. The horizontal angle is equal to a minimum included angle between a connection line between the detected obstacle and a preset point (for example, a center point of the vehicle body) of the vehicle 100 and a reference line (for example, a longitudinal central axis of a horizontal plane of the vehicle shown in FIG. 5A) of the vehicle 100 on the horizontal plane of the vehicle. For example, when the horizontal angle is within a range of [-x1, x1] degrees, the obstacle is in front of the vehicle; or when the horizontal angle is within a range of [180-x1, 180x1] degrees, the obstacle is in rear of the vehicle.

It should be noted that, when the characteristic of the obstacle required for gear prediction is obtained, obtained characteristics of two obstacles of different types may be partially or completely different. For example, a speed of a surrounding vehicle needs to be obtained, and speeds of the road facility (for example, the traffic light), the special natural environment (for example, the river or the lake), and the special road condition (for example, the deep pit) do not need to be obtained.

In some embodiments, the environment information 1 includes one or more of the following: hardware sensing information such as an image captured by a camera module of the vehicle 100, radar information collected by a radar, and distance information collected by a laser rangefinder.

For example, one or more camera modules may be configured on a front side, a rear side, a left side, and a right side of the vehicle body of the vehicle 100, to collect an environmental image in one or more directions of the front, the rear, the left, and the right of the vehicle 100. The image (for example, an image 1) captured by the camera module is input into an image recognition model, so that one or more characteristics (for example, a type, an orientation, a distance, and a speed) of an obstacle included in a specific direction (for example, in front or in rear) of the vehicle body can be identified. The image recognition model is a trained deep learning model.

In some embodiments, with reference to a display location of an obstacle 1 identified in the image 1 and a camera parameter (for example, an angle of view, a height to the ground, or a mounting location of the camera module), a distance between the obstacle 1 and the vehicle body may be further output by using a regression model. In an implementation, an orientation of an obstacle in an image captured by a front-side camera module includes the front, and an orientation of an obstacle in an image captured by a rear-side camera module includes the rear.

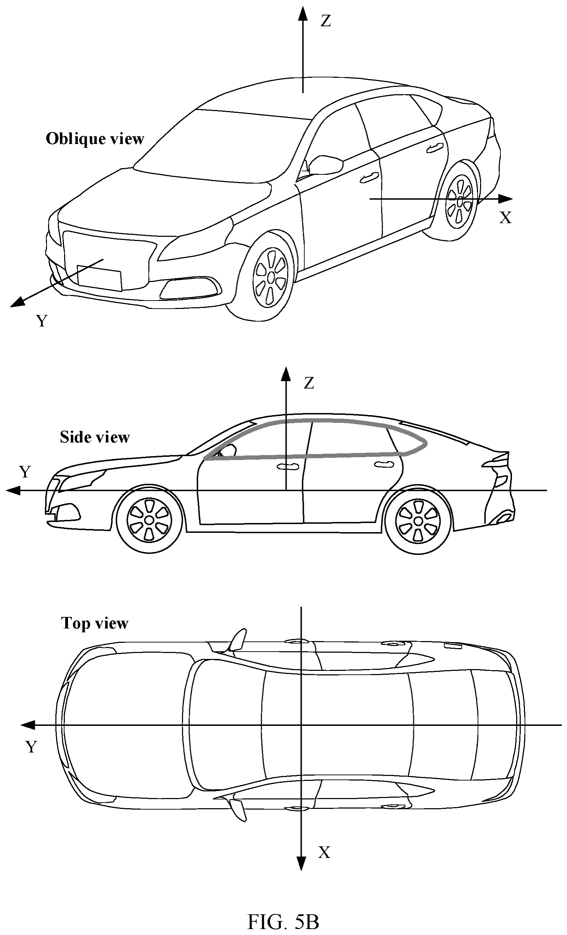

In some embodiments, based on the image 1 collected by the camera module, after the obstacle 1 is identified, a depth of each pixel of the obstacle 1 in the image 1 and display coordinates of each pixel in an image coordinate system of the image 1 may be obtained. With reference to the camera parameter (for example, the angle of view, the height from the ground, or the mounting location of the camera module), the display coordinates of each pixel in the image coordinate system may be converted into coordinates in a preset three-dimensional coordinate system (for example, a geographic coordinate system of the earth or a vehicle coordinate system using the vehicle 100 as a reference). Further, an orientation (for example, the foregoing horizontal angle) and a distance of a location indicated by each pixel of the obstacle 1 relative to the vehicle are determined based on a preset point (for example, a center point) of the vehicle in the preset coordinate system and the display coordinates of each pixel of the obstacle 1. In an implementation, the distance of the obstacle 1 is a minimum distance or an average distance of the location indicated by each pixel relative to the vehicle, and the orientation of the obstacle 1 includes a minimum horizontal angle of the location indicated by each pixel relative to the preset point of the vehicle. For example, FIG. 5B is a diagram of a vehicle coordinate system. The coordinate system uses the preset point of the vehicle as an origin. When the vehicle is on a horizontal road surface, an X axis is parallel to the ground and points to a left side of a driver, a Y axis is parallel to the ground and points to the front side of the vehicle, and a Z axis points to an opposite direction of a gravity direction.

In some embodiments, after the distance of the obstacle 1 is determined based on the image 1 captured by the camera module, a speed/relative speed of the obstacle 1 may be determined based on a distance change.

In some embodiments, the environment information 1 includes radar information detected by the radar, for example, a multi-dimensional point cloud image detected by a lidar/millimeter-wave radar. One or more characteristics of the surrounding obstacle may be identified based on the multi-dimensional point cloud image.

In some embodiments, the environment information 1 includes a distance of the surrounding object detected by the laser rangefinder. An environment model of the vehicle may be created based on the distance of the surrounding object detected by the laser rangefinder, and one or more characteristics of the surrounding obstacle may be identified based on the environment model.

In some embodiments, some road facilities are marked on the map, and a type, a distance, and an orientation of the road facility may be determined based on the road facilities marked on the map and a real-time location of the vehicle 100 that is obtained by a positioning system.

In some embodiments, the characteristic of each obstacle around the vehicle body may be comprehensively identified with reference to a plurality of pieces of data in environment information such as the image captured by the camera module of the vehicle 100, the radar information collected by the radar, and the distance information collected by the laser rangefinder. For example, a three-dimensional environment model of the vehicle 100 is established based on the plurality of pieces of data. The environment model may indicate a position of the vehicle in the three-dimensional coordinate system and a position of each surrounding obstacle in the three-dimensional coordinate system, and may track a required characteristic of the obstacle in real time. In an implementation, a bounding box (Bounding box) of each obstacle in the environment model may be used to indicate a location of the obstacle.

A manner of identifying the characteristic of the obstacle around the vehicle is not specifically limited in this embodiment of this application.

A3: Determine whether the driving status of the vehicle 100 is the starting state; and if the driving status of the vehicle 100 is the starting state, perform A4; or otherwise, perform A6.

A4: Determine whether there is a height-difference obstacle within a preset distance 2 in front of and in rear of the vehicle 100; and if there is the height-difference obstacle within the preset distance 2 in front of and in rear of the vehicle 100, determine that the current scenario is the scenario of starting with a height difference; or otherwise, perform A5. For example, the preset distance 2 is 3 m.

It may be understood that, in this example, a scenario condition corresponding to the scenario of starting with a height difference may include: the driving status is the starting state, and there is a height-difference obstacle within a short distance (namely, the preset distance 2) in front of and in rear of the vehicle. Whether there is an obstacle within a preset distance 3 in both the front and the rear of the vehicle 100 may be determined based on the distance, the orientation, and the type of the obstacle that are identified in step A2.

In this embodiment of this application, that there is a specific object (for example, the height-difference obstacle) within a preset distance in front of and in rear of the vehicle 100 means that there is the specific object within the preset distance in at least one of the front and the rear of the vehicle 100. That there is no specific object (for example, the height-difference obstacle) within a preset distance in front of and in rear of the vehicle 100 means that there is no specific object within the preset distance in any one of the front and the rear of the vehicle 100.

In some embodiments, types of some obstacles (for example, the road shoulder, the river, and the lake) are pre-classified as height-difference obstacles. The height-difference obstacle is an obstacle that has a specific longitudinal depth and that may pose a high drop-off risk and bump risk to traveling of the vehicle. In this embodiment of this application, whether there is a height-difference obstacle within the preset distance 2 from the vehicle 100 may be determined based on the type and the distance of the obstacle that are identified in step A2. In some embodiments, in step A2, the height-difference obstacle is also directly identified by using the trained deep learning model, and then whether there is a height-difference obstacle within the preset distance 2 from the vehicle 100 is determined based on the distance of the height-difference obstacle identified in step A2.

A5: Determine whether there is a short-distance obstacle within the preset distance 3 in both the front and the rear of the vehicle; and if there is the short-distance obstacle within the preset distance 3 in both the front and the rear of the vehicle, determine that the current scenario is the scenario of maneuvering to start; or otherwise, determine that the current scenario is the scenario of starting from a parking space. For example, the preset distance 3 is 2 m.

The scenario of maneuvering to start usually means that, when the vehicle starts, if there is a short-distance obstacle in the front and the rear of the vehicle, the driver needs to move forward and backward for a plurality of times to adjust a location and a traveling direction of the vehicle, making the vehicle travel out of the surrounding obstacle. It may be understood that, when the vehicle is parked in a regular parking space, there is usually no obstacle within a short distance in front of and in rear of the vehicle, and the vehicle can smoothly travel out of the parking space. For example, when the vehicle is parked through reverse parking, there is usually no obstacle in at least one direction in front of and in rear of the vehicle, so that the vehicle can travel out in this direction. In some special cases, there is an obstacle within a short distance in both the front and the rear of the vehicle after the vehicle is parked, and the driver needs to maneuver the vehicle for a plurality of times to drive the vehicle out of a parking space. For example, when the vehicle is parked through parallel parking, if there is a vehicle or a wall in each of the front and the rear of the vehicle, the driver needs to maneuver the vehicle for a plurality of times to drive the vehicle out of a parking space.

It may be understood that, in this example, a scenario condition corresponding to the scenario of maneuvering to start includes: The driving status is the starting state, there is no height-difference obstacle within the preset distance 2 in front of and in rear of the vehicle, and there is an obstacle within the short distance (namely, the preset distance 3) in both the front and the rear of the vehicle. A scenario condition corresponding to the scenario of starting from a parking space includes: The driving status is the starting state, there is no height-difference obstacle within the preset distance 2 in front of and in rear of the vehicle, and there is no obstacle within the short distance (namely, the preset distance 3) in front of or in rear of the vehicle. In this embodiment of this application, whether there is an obstacle within the preset distance 3 in both the front and the rear of the vehicle 100 may be determined based on the distance and the orientation of the obstacle that are identified in step A2.

In some embodiments, step A5 specifically includes: Determine whether there is an obstacle within the preset distance 3 in both the front and the rear of the vehicle within a preset distance 3, and whether a quantity of times that a steering wheel rotates back and forth is greater than a preset quantity 1 (for example, 2) within preset duration 2 (for example, 15s); and if there is the obstacle within the preset distance 3 in both the front and the rear of the vehicle, and the quantity of times that the steering wheel rotates back and forth is greater than the preset quantity 1 within the preset duration 2, determine that the current scenario is the scenario of maneuvering to start; or otherwise, it is determined that the current scenario is the scenario of starting from a parking space. In some implementations, the quantity of times that the steering wheel rotates back and forth may be determined based on a change in a rotation angle of the steering wheel. That the steering wheel rotates back and forth for one time may mean that an angle of the steering wheel first increases and then reduces.

A6: Determine whether there is a traffic light/crosswalk within a preset distance 4 in front of and in rear of the vehicle; and if there is the traffic light/crosswalk within the preset distance 4 in front of and in rear of the vehicle, determine that the current scenario is a traffic-light vehicle following scenario; or otherwise, perform A7.

In the traffic-light vehicle following scenario, the vehicle needs to travel and follow another vehicle at a low speed when the vehicle encounters the traffic light/crosswalk in a traveling process.

It may be understood that, in this example, a scenario condition corresponding to the traffic-light vehicle following scenario may include: the driving status is the traveling state, and there is the traffic light/crosswalk within the preset distance 4 (for example, 20 meters) in front of and in rear of the vehicle. In this embodiment of this application, in step A2, traffic lights in front of and in rear of the vehicle and distances from the traffic lights may be identified.

A7: Determine whether there is an obstacle within a preset distance 5 from a straight-line area in front of the vehicle body; and if there is the obstacle within the preset distance 5 from the straight-line area in front of the vehicle body, perform A8; or otherwise, determine that the current scenario is the closed-road section vehicle following scenario.

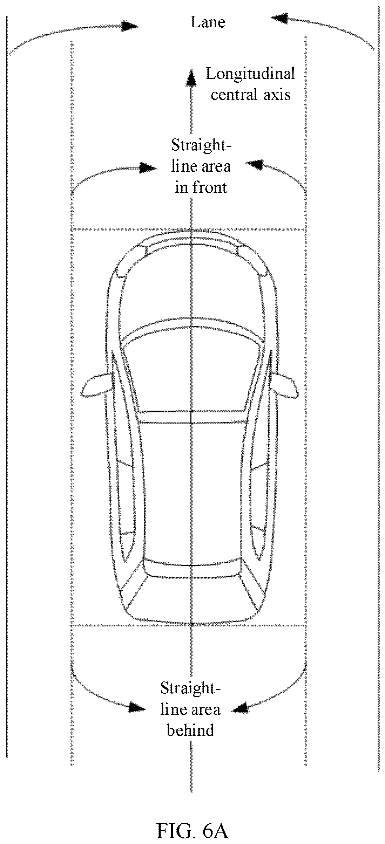

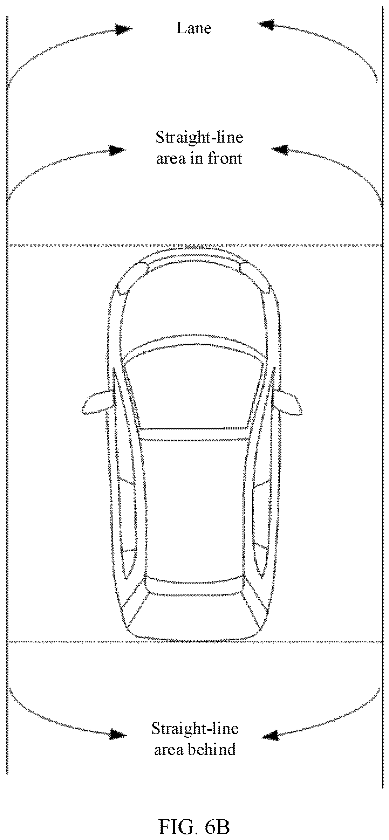

In an implementation, as shown in FIG. 6A and FIG. 6B, a central axis of the straight-line area of the vehicle is parallel to a central axis of the vehicle 100, a front straight-line area is a straight-line area located in front of a vehicle front of the vehicle 100, and a rear straight-line area is a straight-line area located in rear of a vehicle rear of the vehicle 100. In an implementation, with reference to FIG. 6A, the central axis of the straight-line area of the vehicle coincides with the central axis of the vehicle 100, and a width of the straight-line area of the vehicle is determined based on a vehicle width. For example, a width of the straight-line area of the vehicle is equal to the vehicle width, or the width of the straight-line area of the vehicle is equal to the vehicle width plus a preset value 1 (for example, 0.2 meter). In an implementation, as shown in FIG. 6B, the straight-line area of the vehicle is a lane area in which the vehicle 100 is currently located.

A8: Determine whether the obstacle and the vehicle 100 move in reverse directions; and if the obstacle and the vehicle 100 move in reverse directions, determine that the current scenario is the narrow-road meeting scenario; or otherwise, determine that the current scenario is the closed-road section vehicle following scenario.

When there is the obstacle 1 within the preset distance 5 from the straight-line area in front of the vehicle body or not, whether the obstacle 1 and the vehicle move in reverse directions is determined. In an implementation, whether the speed of the obstacle 1 is greater than zero, a relative speed of the obstacle 1 relative to the vehicle (that is, the vehicle 100) is greater than the speed of the vehicle, and a distance between the obstacle 1 and the vehicle is reduced is determined; and if the speed of the obstacle 1 is greater than zero, the relative speed of the obstacle 1 relative to the vehicle (that is, the vehicle 100) is greater than the speed of the vehicle, and the distance between the obstacle 1 and the vehicle is reduced, it is determined that the obstacle 1 and the vehicle 100 move in reverse directions; or otherwise, the obstacle 1 and the vehicle 100 move in a same direction. In an implementation, when the speed of the obstacle is greater than zero, whether a front surface of the obstacle 1 (for example, the vehicle front of the vehicle) faces the vehicle 100 is determined through image recognition; and if the front surface of the obstacle 1 (for example, the vehicle front of the vehicle) faces the vehicle 100, it is determined that the obstacle 1 and the vehicle 100 move in reverse directions; or otherwise, the obstacle 1 and the vehicle 100 move in a same direction. An implementation of determining whether the obstacle and the vehicle move in reverse directions is not specifically limited in this embodiment of this application.

In the narrow-road meeting scenario, there is a vehicle that travels in a reverse direction at a short distance in the straight-line area in front of the vehicle. In the closed-road section vehicle following scenario, there is a vehicle that travels in a same direction at a short distance in the straight-line area in front of the vehicle. It may be understood that, in this example, a scenario condition corresponding to the narrow-road meeting scenario includes: The driving status is not the starting state, there is no traffic light/crosswalk within the preset distance 4 in front of and in rear of the vehicle, there is the obstacle (1, for example, an obstacle 2) within the preset distance 5 from the straight-line area in front of the vehicle body, and the obstacle 2 and the vehicle 100 move in reverse directions. A scenario condition corresponding to the closed-road section vehicle following scenario includes: The driving status is the traveling state, there is no traffic light/crosswalk within the preset distance 4 in front of and in rear of the vehicle, and there is no obstacle within the preset distance 5 from the straight-line area in front of the vehicle body; or there is the obstacle within the preset distance 5 from the straight-line area in front of the vehicle body and the obstacle and the vehicle 100 move in a same direction.

An execution sequence of steps A1 to A8 is not specifically limited in this embodiment of this application. It may be understood that, if the first scenario corresponds to a first scenario condition 1, provided that the vehicle 100 meets the first scenario condition, it may be determined that the vehicle 100 is currently in the first scenario. A determining sequence of one or more conditions included in the scenario condition 1 is not specifically limited. In addition, characteristics of the obstacle and/or vehicle parameters (for example, the driving status) that are/is required in steps A3 to A8 may be obtained separately when the steps are performed, or may be collectively obtained in advance in step A2. This is not specifically limited herein. In this embodiment of this application, scenarios in which the vehicle is located are subdivided, and names of the scenarios are merely examples of names. This is not specifically limited in this embodiment of this application. In this embodiment of this application, based on a scenario condition corresponding to each scenario, the scenario is limited.

S102: Determine passability of the vehicle 100 in a preset direction based on an identified environmental feature 2.

In this embodiment of this application, the environmental feature 2 may also be referred to as a second environmental feature.

In some embodiments, the preset direction includes a forward direction (namely, a front direction) and a backward direction (namely, a rear direction).

In some embodiments, the environmental feature 2 includes the orientation and the distance of the obstacle, where the orientation of the obstacle indicates whether the obstacle is located in the preset direction of the vehicle 100. When it is determined, based on the orientation of the obstacle, that there is no obstacle within a preset distance 6 in the preset direction, the preset direction is passable. When an obstacle within a preset distance 6 in the preset direction is determined, based on a distance of each obstacle in the preset direction, a minimum distance of the obstacle in the preset direction is obtained. When the minimum distance is less than a safe distance threshold, the preset direction is impassable; or otherwise, the preset direction is passable.

In some embodiments, the passability in the preset direction is determined based on a vehicle parameter 2 and the environmental feature 2. The vehicle parameter 2 includes a turning radius and a turning center, and the environmental feature 2 is used to determine the minimum distance of the obstacle in the preset direction. Step S102 specifically includes steps B1 to B3.

B1: Obtain a minimum turning radius and a turning center of the vehicle 100 based on the vehicle parameter 2.

The turning center refers to a center of a circular trajectory traced by a central plane of an outer steering wheel of the vehicle on a supporting plane in a vehicle traveling and moving process, and is usually located on an extension line of a rear axle (or a projection line of a rear axle on the supporting plane). The turning radius refers to a radius of the circular trajectory, and to be specific, is a distance of a contact point between the central plane of the outer steering wheel and the ground to the turning center. The minimum turning radius is a turning radius present when the steering wheel is turned to a maximum extent thereof (that is, when a wheel steering angle is the largest). The minimum turning radius indicates a capability of the vehicle to pass through a narrow bending area or bypass an obstacle that cannot be crossed. It may be understood that, after the turning radius is driven, a location of the turning center may be determined based on the contact point between the outer steering wheel and the ground and the rear axle (or the projection line of the rear axle on the supporting plane).

The turning radius is related to some or all of vehicle parameters such as the width, a length, and an axle distance of the vehicle and the wheel steering angle (wheel angle) corresponding to the steering wheel. In some embodiments, the vehicle parameter 2 includes the length (L) of the vehicle and a maximum wheel steering angle (Ψ). In this case, the minimum turning radius R = L/2(Sinψ). A manner of determining the turning center and the turning radius is not specifically limited in this embodiment of this application. Manners of determining turning centers and turning radii of vehicles of different types and different models may be different.

B2: Obtain a minimum distance 1 between the turning center and an obstacle in a preset direction 1.

In some embodiments, the environmental feature 2 includes a bounding box of the obstacle (for example, an obstacle 3) in the preset direction in the foregoing preset coordinate system, where the bounding box indicates a position of the obstacle in the preset coordinate system (for example, the vehicle coordinate system or the geographic coordinate system). Shortest distances between the turning center and bounding boxes of obstacles in the preset direction are determined, to determine a minimum value of the shortest distances corresponding to the obstacles, namely, the minimum distance of the obstacle in the preset direction.

The minimum distance between the obstacle and the turning center is limited to being determined based on the bounding box of the obstacle. The minimum distance may alternatively be determined in another manner. This is not specifically limited herein. In an implementation, the distance of the obstacle obtained in step A2 is a distance and an azimuth of the obstacle relative to the preset point (for example, a center point of the vehicle front) of the vehicle 100. The distance of the obstacle relative to the turning center may be determined by using a trigonometric function based on the distance and the azimuth of the obstacle and locations of the preset point and the turning centers.

With reference to the foregoing embodiment, in this embodiment of this application, the three-dimensional environment model of the vehicle 100 may be established based on the plurality of pieces of data in the environment information such as the image captured by the camera module, the radar information collected by the radar, and the environmental distance information collected by the laser rangefinder. The environment model may indicate the position of the vehicle in the three-dimensional coordinate system and a bounding box of a surrounding obstacle in the three-dimensional coordinate system. The bounding box (Bounding box) of the obstacle may be a three-dimensional bounding box in the preset coordinate system, or may be a two-dimensional bounding box on a horizontal plane of the preset coordinate system. This is not specifically limited herein. The horizontal plane is parallel to a plane formed by an X axis and a Y axis of the preset coordinate system, and the horizontal plane includes the turning center of the vehicle.

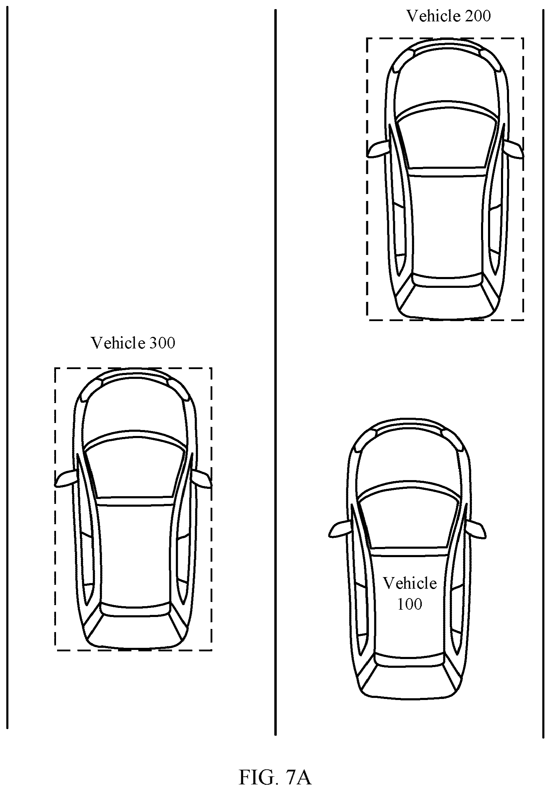

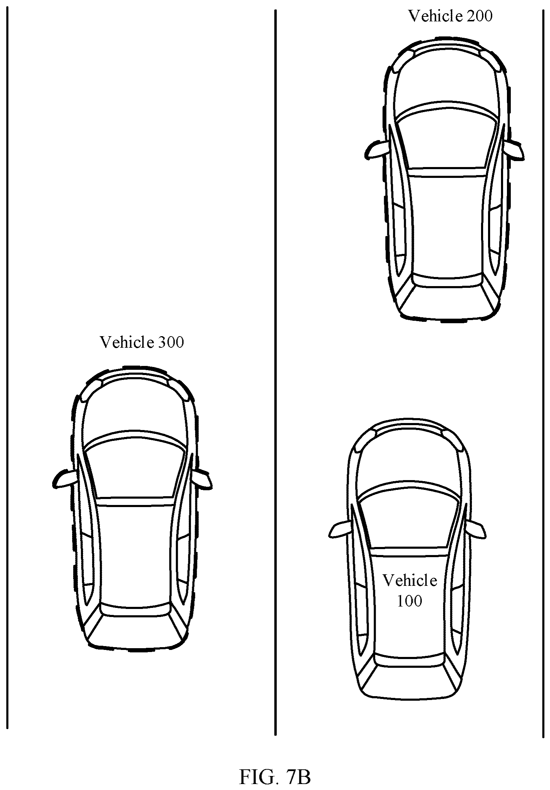

In an implementation, the bounding box of the obstacle is a bounding box in a preset shape including the obstacle (for example, a two-dimensional rectangular bounding box or a three-dimensional cuboid bounding box). For example, FIG. 7A shows two-dimensional rectangular bounding boxes of vehicles (for example, a vehicle 200 and a vehicle 300) around the vehicle 100. In an implementation, the bounding box of the obstacle includes points on a surface of the obstacle, and a shape of the bounding box of the obstacle is a shape of the obstacle. For example, FIG. 7B shows two-dimensional bounding boxes of vehicle shapes of vehicles (for example, a vehicle 200 and a vehicle 300) around the vehicle 100.

B3: If the minimum distance 1 and the minimum turning radius of the obstacle meet a preset relationship 1, the preset direction corresponding to the obstacle is passable; or otherwise, the preset direction is impassable.

In some embodiments, the preset relationship 1 includes that the minimum distance 1 is greater than the minimum turning radius. For example, a minimum distance of the obstacle in the preset direction 1 (for example, the front or the rear) is determined as a minimum distance corresponding to the obstacle 3. The minimum distance of the obstacle 3 is compared with the minimum turning radius. If the minimum turning radius is greater than the minimum distance, the vehicle body inevitably collides with the obstacle 3 at any rotation angle of the steering wheel (for example, an angle corresponding to a limit position to which the steering wheel rotates), and the preset direction 1 corresponding to the obstacle 3 is impassable; or otherwise, the vehicle body does not collide with the obstacle 3, and the preset direction 1 corresponding to the obstacle 3 is passable.

In some embodiments, the preset relationship 1 includes that the minimum distance 1 is greater than the minimum turning radius, and a difference between the minimum distance 1 and the minimum turning radius is greater than a preset value 2 (for example, 0.1 m). It may be understood that the minimum turning radius plus the preset value 2 is a safe distance threshold for the vehicle 100 to turn.

S103: Determine a predicted gear based on the current scenario and the passability in the preset direction.

In this embodiment of this application, a plurality of decision parameters (for example, the current scenario and a result of the passability in the preset direction) preset for the gear are analyzed, and an actual traveling environment is tested, so that optimal gears corresponding to different values of each decision parameter can be determined. After the optimal gear is determined, the gear processing apparatus presets a correspondence table of a first correspondence between different values of the plurality of decision parameters and optimal gears (namely, predicted gears). After a value of each decision parameter is determined, a corresponding optimal gear may be obtained by querying the table, where the optimal gear is a predicted gear that is predicted by the gear processing apparatus and that is most suitable for the current scenario.

In some embodiments, the predicted gear is determined based on a plurality of decision parameters 1. The plurality of decision parameters 1 include a part or all of the following parameters: the current scenario, the passability in the preset direction, a movement characteristic of a nearest obstacle within a preset distance 7 in the preset direction (that is, the front and the rear), and a height-difference obstacle within/outside the preset distance 2 in the preset direction. In this embodiment of this application, the movement characteristic of the obstacle may be obtained before step S103. For example, the characteristic of the obstacle obtained in step A2 includes the movement characteristic of the obstacle.

In some embodiments, the movement characteristic of the obstacle indicates, when the speed of the obstacle is greater than zero, whether the obstacle moves laterally or longitudinally relative to the vehicle, whether the obstacle is dynamic or static relative to the vehicle, and whether the obstacle is moving away or approaching relative to the vehicle. The movement characteristic of the obstacle includes a part or all of the following: longitudinally dynamic moving away, longitudinally dynamic approaching, longitudinally relative static, laterally dynamic moving away, and laterally dynamic approaching. In an implementation, the obstacle 1 is used as an example. A small included angle formed by intersection of a moving direction of the obstacle 1 and a longitudinal central axis (for example, the longitudinal central axis shown in FIG. 5A) of the vehicle is identified. If the included angle is less than an angle threshold 1 (for example, 45 degrees), the obstacle moves longitudinally; or otherwise, the obstacle moves horizontally. In an implementation, if the distance between the obstacle 1 and the vehicle 100 is continuously reduced or increased, and a change value of the distance in unit duration is greater than or equal to a preset distance (namely, a small distance, for example, 0.05 m), the obstacle 1 is dynamic relative to the vehicle; or otherwise, the obstacle 1 is static relative to the vehicle. If the distance between the obstacle 1 and the vehicle 100 is continuously reduced, the obstacle 1 is moving away from the vehicle. If the distance between the obstacle 1 and the vehicle 100 is continuously increased, the obstacle 1 is moving away from the vehicle. It may be understood that, if the movement characteristic of the obstacle 1 is longitudinally dynamic moving away, the obstacle 1 moves longitudinally relative to the vehicle, and is dynamically moving away from the vehicle.

For example, the plurality of decision parameters 1 include the current scenario, the passability in the preset direction, the movement characteristic of the nearest obstacle within the preset distance 7 in the preset direction (that is, the front and the rear), and the height-difference obstacle within/outside the preset distance 2 in the preset direction. A preset scenario includes the scenario of starting with a height difference, the scenario of starting from a parking space, the scenario of maneuvering to start, the traffic-light vehicle following scenario, the narrow-road meeting scenario, and the closed-road section vehicle following scenario. The preset direction includes front and rear. The movement characteristic of the obstacle includes longitudinally dynamic moving away, longitudinally dynamic approaching, longitudinally relative static (for ease of description, which may be briefly referred to as static in the table), laterally dynamic moving away, and laterally dynamic approaching. The height-difference obstacle within the preset distance 2 may be briefly referred to as a near height difference, and the height-difference obstacle outside the preset distance 2 may be briefly referred to as a far height difference. Table 1 shows a correspondence table between some values of each decision parameter 1 and optimal gears provided in this embodiment of this application. After the values of the decision parameter are determined, the gear processing apparatus determines a corresponding optimal gear by querying Table 1.

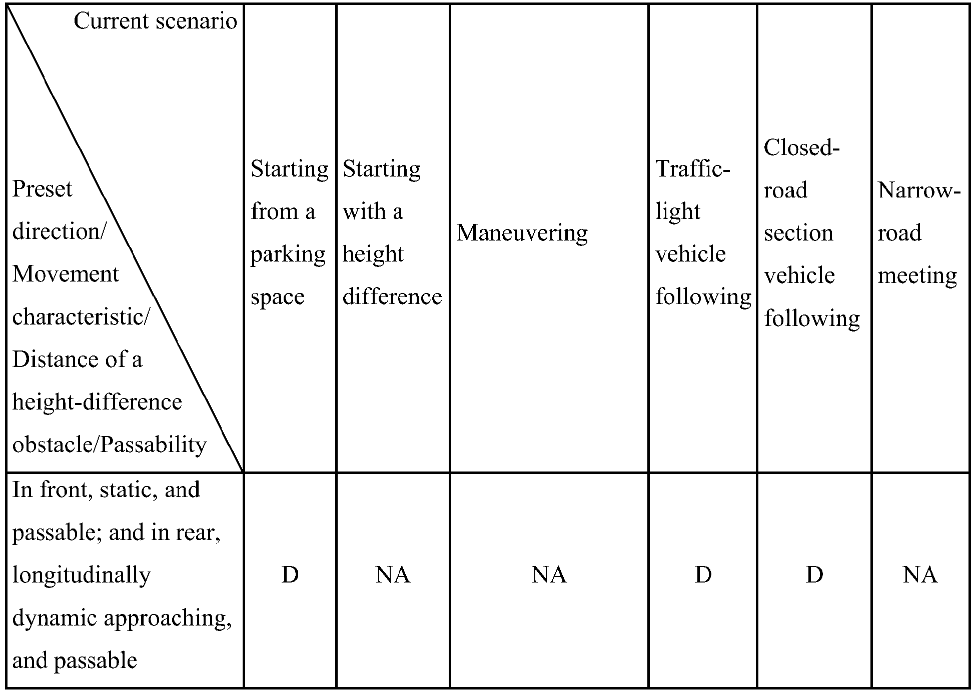

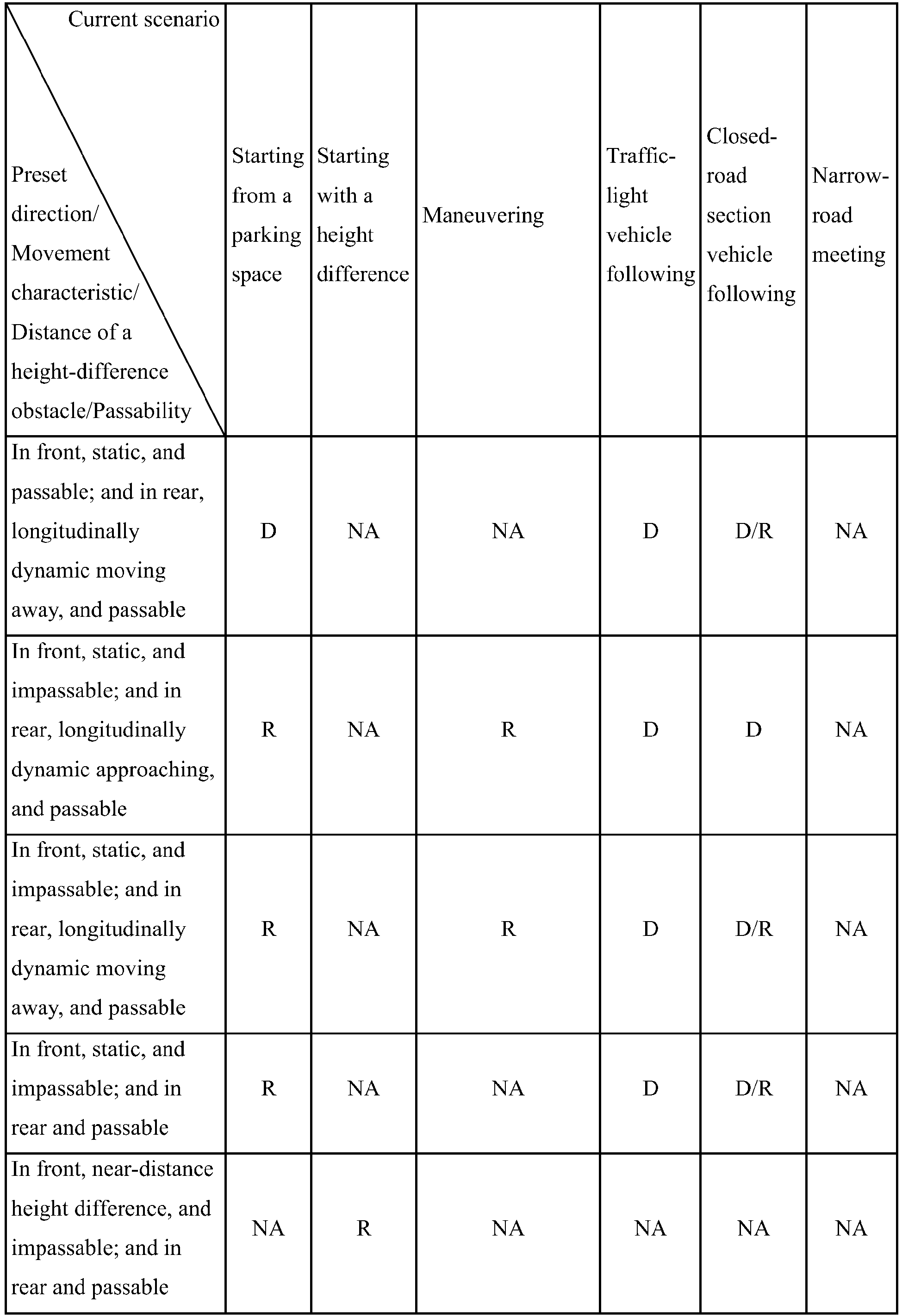

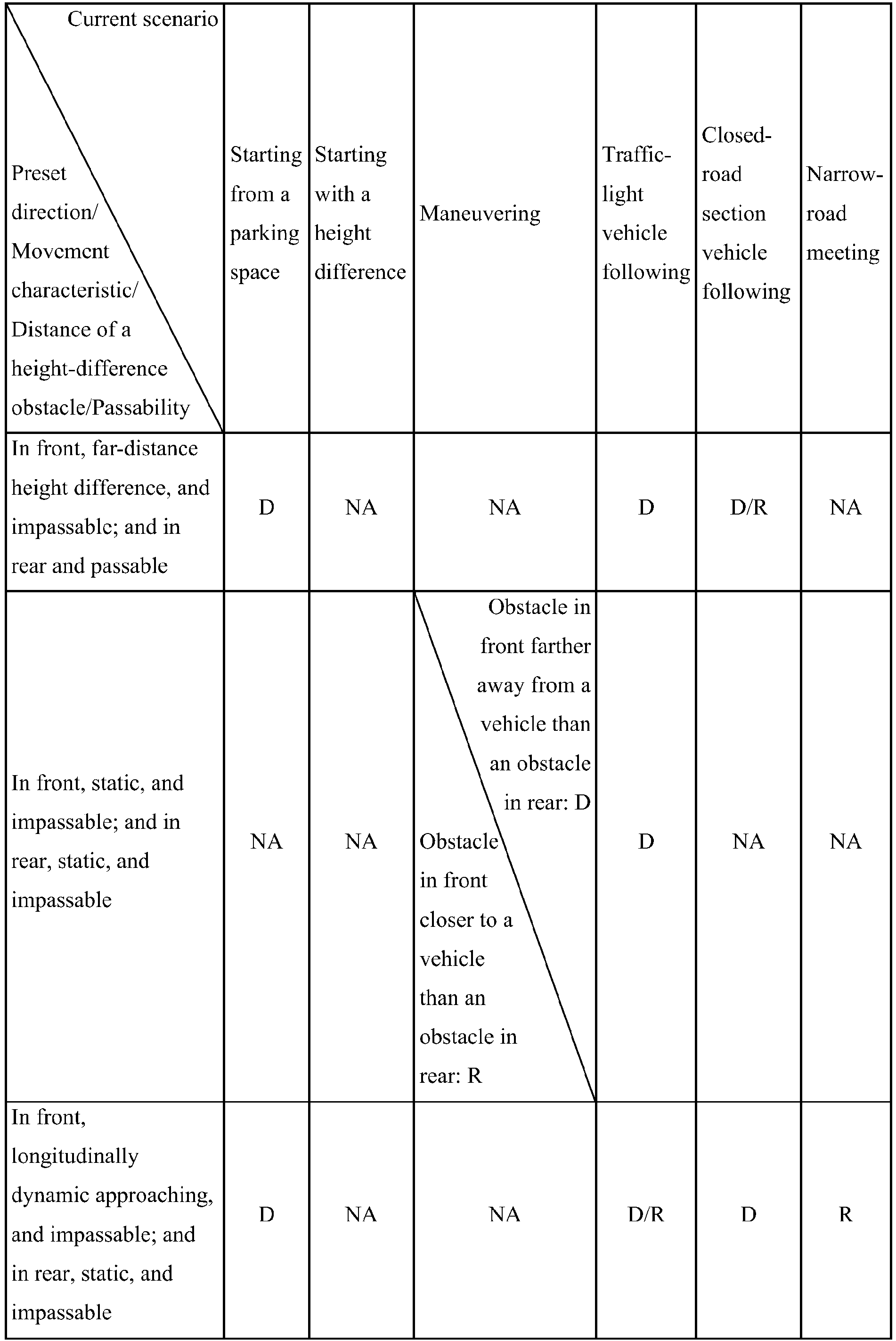

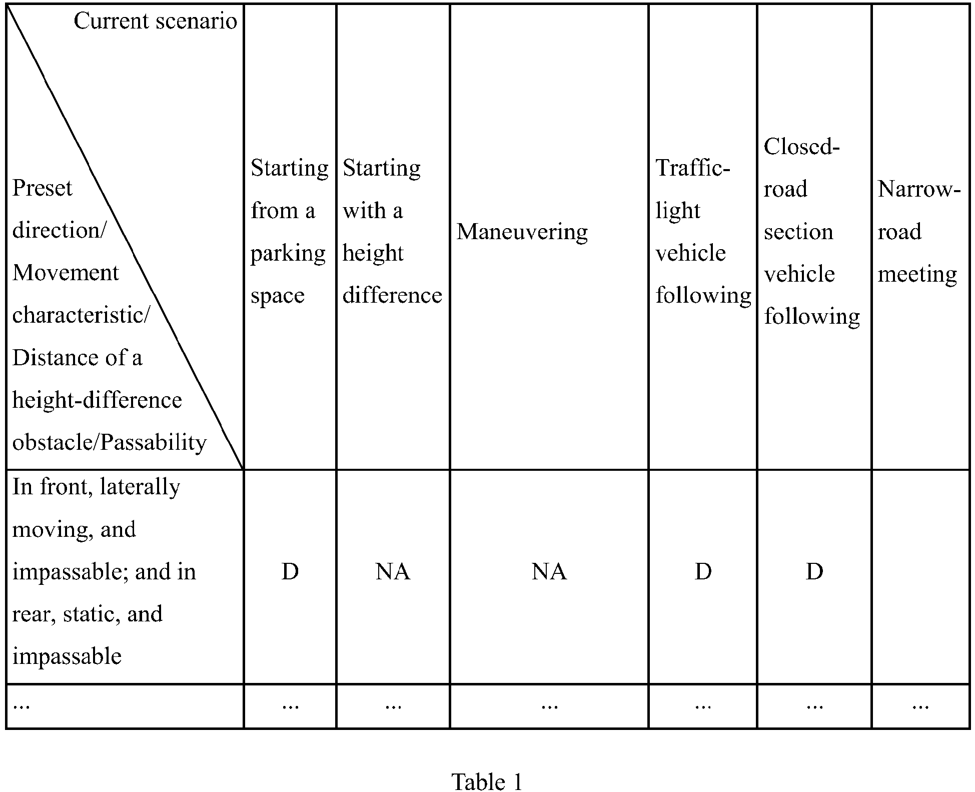

It should be noted that the first column of Table 1 indicates the passability in the preset direction, the movement characteristic of the nearest obstacle within the preset distance 7 in the preset direction (that is, the front and the rear), and the distance of the height-difference obstacle in the preset direction. If a row in the first column does not indicate the movement characteristic of the obstacle, it indicates that all movement characteristics of the obstacle are applicable. If a row in the first column does not indicate the height-difference obstacle, it indicates that no height-difference obstacle is detected. NA in the table indicates that no optimal gear. The user may independently determine the gear based on personal awareness. Table 1 is an example provided in this embodiment of this application, and should not constitute a limitation on this embodiment of this application. The correspondence between the values of each decision parameter and the optimal gears is determined based on data analysis and an actual traveling test.

In some embodiments, gears 1 corresponding to different values of each decision parameter 1 are determined based on the first correspondence between the plurality of decision parameters 1 and the gears. For example, with reference to Table 1, a gear determining result of the gear 1 corresponding to each decision parameter 1 in Table 1 is a D gear (drive gear), an R gear (reverse gear), or NA. When the gear 1 is the D gear, a gear 2 is determined based on a second correspondence between one or more decision parameters 2 and a gear, and a gear determining result of the gear 2 is the D gear, an S gear, or an L gear. The gear 2 is a finally predicted gear. It may be understood that, in this embodiment, whether a gear for moving forward or a gear for reversing is applicable to the current scenario is first determined based on the decision parameter 1, and then that the gear for moving forward that is suitable for the current scenario is specifically the D gear, the S gear, or the L gear is further determined based on the decision parameter 2 after the gear for moving forward that is suitable is determined.

In this embodiment of this application, the decision parameter 1 may also be referred to as a first decision parameter, the decision parameter 2 may also be referred to as a second decision parameter, and the gear 1 may also be referred to as a first gear.

In some embodiments, the decision parameter 2 may further include one or more of the following: a slope of a road surface on which the vehicle is located, a length of a ramp whose slope is outside a first slope range, whether a road surface in front is slippery, and whether traffic congestion occurs. The first slope range indicates a gentle ramp, for example, [20,30] degrees. The slope of the road surface on which the vehicle is located may be determined based on an inclination of the vehicle, and the inclination of the vehicle may be detected by using a sensor system (for example, an IMU 124) of the vehicle 100. The slope of the road surface is marked in some navigation maps, and the slope of the road surface on which the vehicle is located and an approximate length of the ramp may be determined by querying the navigation map based on positioning of the vehicle 100. Whether the road surface in front is slippery may be identified based on an image captured by a camera module of the vehicle 100, and may be further identified with reference to a weather forecast (for example, rain or snow in a short time). Whether traffic congestion occurs may be identified based on the image captured by the camera module of the vehicle 100. A road section on which traffic congestion occurs is usually marked in the navigation map. In this case, whether traffic congestion occurs at the location at which the vehicle 100 is located may also be determined by querying the navigation map based on the positioning of the vehicle 100. Determining of a value of the decision parameter 2 is not specifically limited in this embodiment of this application.

In some embodiments, determining the gear 2 based on values of the one or more decision parameters 2 includes: when the slope of the road surface on which the vehicle is located is within the first slope range and the length of the ramp on which the vehicle is currently located is less than or equal to a first value, determining that the gear 2 is the S gear; when the slope of the road surface on which the vehicle is located is within the first slope range and the length of the ramp on which the vehicle is currently located is greater than a first value, or when the slope of the road surface on which the vehicle is located is within a second slope range (for example, the second slope range is greater than 30 degrees), determining that the gear 2 is the L gear; when the road surface on which the vehicle is located is a slippery road surface, determining that the gear 2 is the S gear or the L gear; when traffic congestion occurs, determining that the gear 2 is the L gear; or in another case, determining that the gear 2 is the D gear. A slope within the second slope range is greater than a slope within the first slope range.

In some embodiments, the correspondence between the decision parameter 1 and the optimal gear and the correspondence between the decision parameter 2 and the optimal gear may be directly preset, so that a predicted gear suitable for the current scenario is determined at a time based on values of the decision parameter 1 and the decision parameter 2.

S104: Perform a prompt operation and/or an intervention operation when the predicted gear is inconsistent with an actual gear.

In some embodiments, the predicted gear may be the D gear or the R gear, for example, the gear described in Table 1. In some embodiments, the predicted gear may be the gear (for example, the D gear, the S gear, or the L gear) for traveling forward, or the gear (for example, the R range) for traveling backward.

In some embodiments, when a predicted gear output by a system is consistent with the actual gear, current gear prediction ends. In some embodiments, when a predicted gear output by a system is inconsistent with the actual gear, the prompt operation is performed. In some embodiments, when a predicted gear output by a system is inconsistent with the actual gear, the intervention operation is performed. In some embodiments, when a predicted gear output by a system is inconsistent with the actual gear, the prompt operation is first performed, and then whether to perform the intervention operation is determined based on a detected user behavior.

In some embodiments, the predicted gear may be the gear (for example, the D gear, the S gear, or the L gear) for traveling forward, or the gear (for example, the R range) for traveling backward. If the predicted gear output by the system is inconsistent with the actual gear, when a traveling direction corresponding to the predicted gear is consistent with that corresponding to the actual gear, the prompt operation is performed, and the intervention operation is not performed; or when a traveling direction corresponding to the predicted gear is inconsistent with that corresponding to the actual gear, the prompt operation is first performed, and then whether to perform the intervention operation is determined based on the detected user behavior.

In an implementation, performing the prompt operation includes: The vehicle 100 outputs first audio by using a sound output apparatus (for example, a speaker 152). In an implementation, performing the prompt operation includes: The vehicle 100 displays prompt information through a vehicle-mounted display (for example, a central display screen and a dashboard) in a display system. The first audio and the prompt information are used to prompt the user with one or more of the following information: a current risk of gear mis-shift, the predicted gear, inconsistence between the predicted gear and the actual gear, the traveling direction corresponding to the actual gear (that is, a traveling direction of the vehicle in the actual gear present after the user steps on an accelerator pedal), and the like. In an implementation, when the prompt operation is performed, a window or a control for shifting the gear may be further displayed.

Based on the prompt audio and/or the prompt information, the user may check in a timely manner whether the current gear is appropriate. If the current gear is inappropriate, the user shifts the gear to an appropriate gear with reference to an actual situation and the predicted gear, to avoid the risk of gear mis-shift in a timely manner.

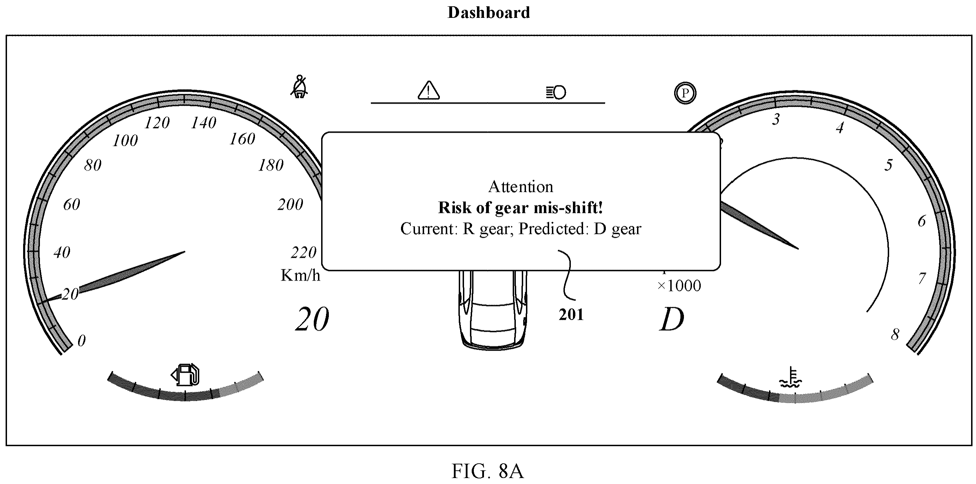

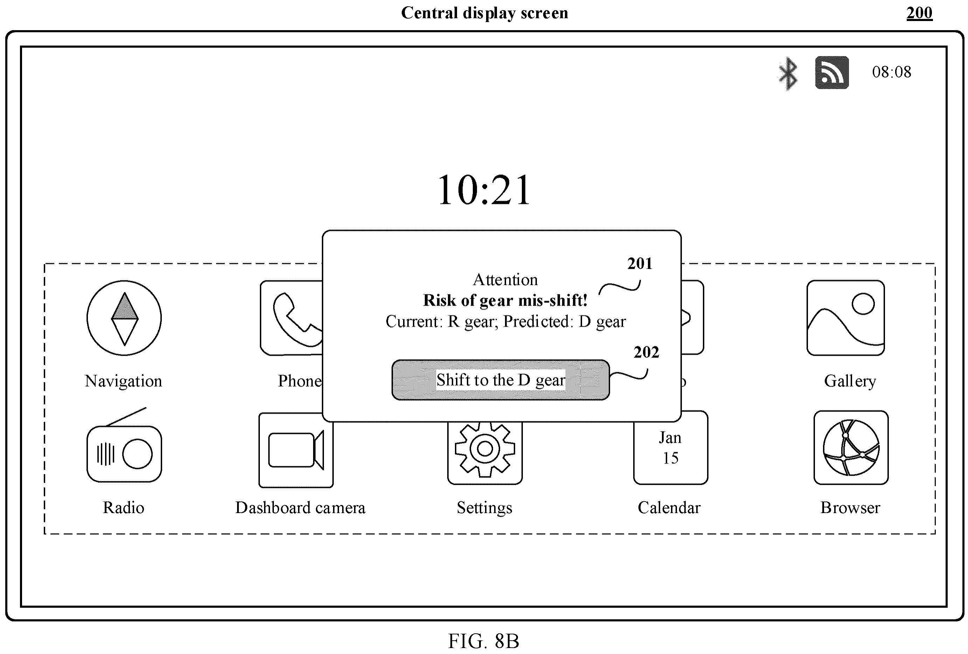

For example, as shown in FIG. 8A to FIG. 8C, when the predicted gear output by the system is inconsistent with the actual gear, prompt information 201 is displayed on the central display screen and/or the dashboard, where the prompt information 201 is used to prompt the user with the current risk of gear mis-shift and the predicted gear (that is, the D gear). As shown in FIG. 8B, when the predicted gear output by the system is inconsistent with the actual gear, a shift button 202 may be further displayed, where the shift button 202 is used to shift the gear to the predicted gear.

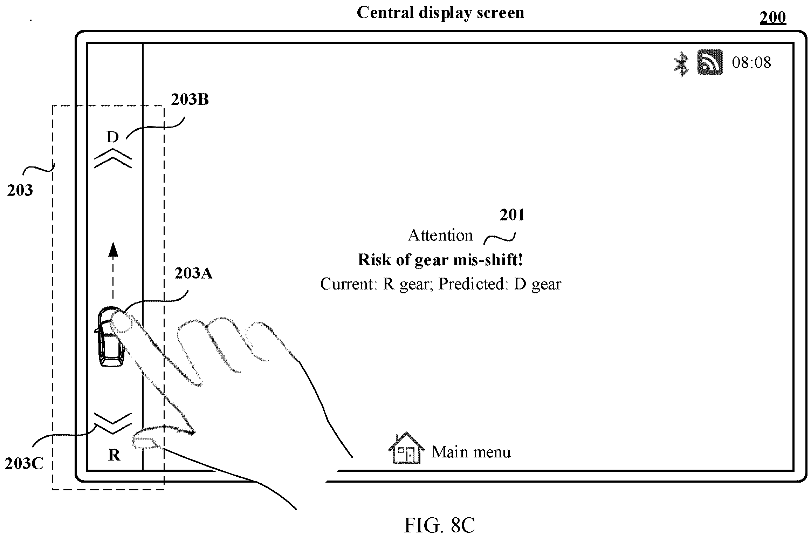

For example, as shown in FIG. 8C, a gear shift control 203 is displayed in a side area of the central display screen, and the gear shift control 203 includes a vehicle icon 203A, a D gear identifier 203B, and an R gear identifier 203C. After an operation of dragging the vehicle icon 203A to the D/R gear identifier is detected, the vehicle 100 may shift the gear to the D/R gear. The user may drag the vehicle icon 203A upward to the D gear identifier 203B based on the prompt information 201, to shift the gear to the predicted gear.

In some embodiments, the intervention operation includes one or more of the following: controlling the vehicle 100 to decelerate (for example, decelerate to a preset speed value); forcibly stopping the vehicle 100; controlling the speed of the vehicle 100 to reduce to an appropriate range and automatically shifting the gear to the predicted gear; controlling the speed of the vehicle 100 to reduce to an appropriate range and automatically shifting the gear to the P gear/N gear; increasing stepping resistance of an accelerator pedal, to avoid an increase in the risk of gear mis-shift caused by fast acceleration; reducing an extent to which stepping on the accelerator pedal (for example, the accelerator pedal) increases the speed of the vehicle, to increase a user response time; and controlling the accelerator pedal unable to be stepped on, to avoid a further increase in the risk of gear mis-shift caused by acceleration through the accelerator. In an implementation, intervention operations corresponding to different decision parameters (for example, scenarios) may be preset, and a required intervention operation may be determined based on a current value of the decision parameter (for example, the current scenario).

In this embodiment of this application, the preset distance 2 may also be referred to as a second distance, the preset distance 2 may also be referred to as the second distance, the preset distance 3 may also be referred to as a third distance, the preset distance 4 may also be referred to as a fourth distance, the preset distance 5 may also be referred to as a fifth distance, the preset distance 6 may also be referred to as a sixth distance, and the preset distance 7 may also be referred to as a seventh distance.

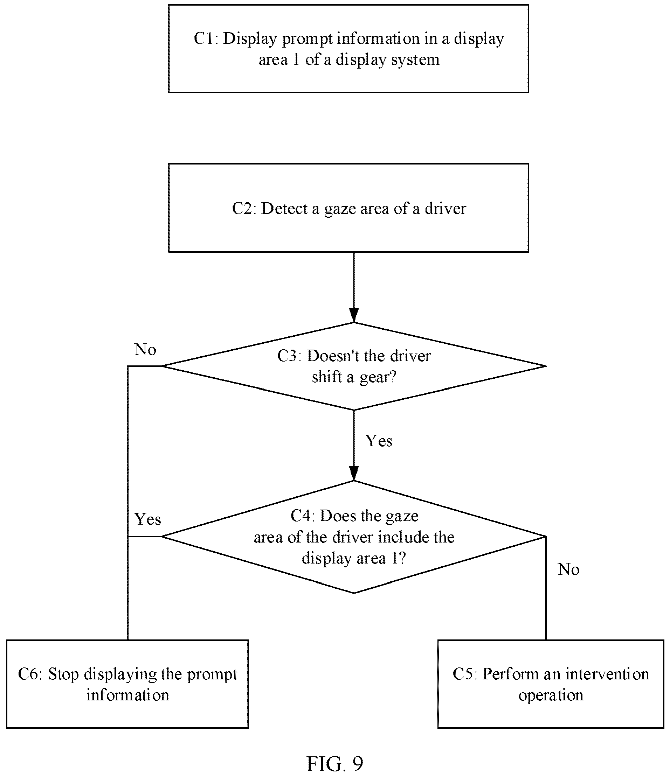

In some embodiments, performing the prompt operation first, and then determining, based on the detected driver behavior, whether to perform the intervention operation includes: performing the prompt operation, where the prompt operation includes displaying the prompt information; and performing the intervention operation if, within fourth preset duration, it is not detected that the driver gazes at the prompt information or shifts the gear. For example, with reference to FIG. 9, this embodiment may specifically include steps C1 to C6.

C1: Perform the prompt operation, where the prompt operation includes displaying the prompt information in a display area 1.

The display area 1 may include a plurality of areas that are in the vehicle-mounted display and that are used for displaying the prompt information. For example, with reference to FIG. 8A and FIG. 8B, the display area 1 includes areas that are in the dashboard and the central display screen and that are used for displaying prompt information 201. Alternatively, the display area 1 includes the dashboard and the central display screen.

C2: Detect a gaze area of the driver.

After the prompt information is displayed, the gaze area of a line of sight of the driver is detected in real time. The gaze area of the driver usually includes areas such as a rearview mirror, the dashboard, the central display screen, and a gear shift mechanism.

C3: Detect whether the driver shifts the gear within the fourth preset duration after the prompt information is displayed; and if the driver does not shift the gear, perform C4; or otherwise, perform C6.

In an implementation, step C3 includes: Detect whether the driver shifts the gear to the predicted gear within the fourth preset duration after the prompt information is displayed.

C4: Determine whether the gaze area of the driver within the fourth preset duration after the prompt information is displayed includes the display area 1; and if the gaze area of the driver within the fourth preset duration after the prompt information is displayed does not include the display area 1, perform C5; or if the gaze area of the driver within the fourth preset duration after the prompt information is displayed includes the display area 1, perform C6.

In this embodiment of this application, one or more sensors may be deployed inside the vehicle 100, and the driver may be tracked by using the collected one or more sensors. The one or more sensors may include a camera module, a radar, another sensor that can collect video image information of the driver, or the like. Based on one or more of sensor data such as an image, a video, and point cloud data collected by the sensor, the line of sight of the driver may be tracked, to obtain the line of sight of the driver, and further determine the gaze area of the line of sight. For example, the collected image, video, and/or point cloud data may be input to a trained neural network, and the line of sight of the driver is tracked by using the neural network. The neural network outputs a line of sight of the driver at each moment.

Whether the gaze area of the line of sight of the driver includes the display area 1 may be determined based on the line of sight of the driver and a position of the display area 1 in a preset coordinate system. The preset coordinate system may be a coordinate system established by using a center of the sensor, the vehicle, or the display as an origin, or may be another preset coordinate system. This is not limited herein.

C5: Perform the intervention operation.

C6: Stop displaying the prompt information.

An execution sequence of step C4 and step C5 is not specifically limited in this embodiment of this application. Whether the driver shifts the gear and whether the gaze area of the driver includes the display area 1 may be simultaneously detected, or whether the gaze area of the driver includes the display area 1 may be first detected. This is not specifically limited herein. It may be understood that, after it is determined that the predicted gear is inconsistent with the actual gear, if the driver does not correct the gear, and it is determined, based on the line of sight of the driver, that the driver does not notice the prompt information, the system performs the intervention operation.

In some embodiments, determining, based on the detected driver behavior, whether to perform the intervention operation includes: after the prompt operation is performed, if detecting that the driver behavior meets a first behavior condition, determining to perform the intervention operation. The first behavior condition includes: Within the fourth preset duration after the prompt information is displayed, the line of sight of the driver gazes at the display area of the prompt information and/or the driver shifts the gear.

The implementations of this application may be combined as required to achieve different technical effects.

All or some of the foregoing embodiments may be implemented by software, hardware, firmware, or any combination thereof. When the software is used to implement embodiments, all or some of embodiments may be implemented in a form of computer program product. The computer program product includes one or more computer instructions. When the computer program instructions are loaded and executed on a computer, all or some of the procedures or functions according to this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (solid state disk, SSD)), or the like.

A person of ordinary skill in the art may understand that all or some of the procedures of the method in embodiments may be implemented by a computer program instructing related hardware. The program may be stored in a computer-readable storage medium. When the program is run, the procedures of the method in embodiments may be performed. The foregoing storage medium includes any medium that can store program code, for example, a ROM, a random access memory RAM, a magnetic disk, or an optical disc.

In conclusion, the foregoing descriptions are merely embodiments of the technical solutions of the present invention, but are not intended to limit the protection scope of the present invention. Any modification, equivalent replacement, improvement, or the like made according to the disclosure of the present invention shall fall within the protection scope of the present invention.

## Claims

1. A gear processing method, applied to a gear processing apparatus, and comprising:
when a first vehicle parameter and a first environmental feature meet a first scenario condition, determining a first scenario in which a vehicle is located, wherein the first scenario is any one of a plurality of preset scenarios;
determining passability of the vehicle in a preset direction based on a detected second environmental feature;
determining a predicted gear based on the current scenario and the passability in the preset direction; and
performing a prompt operation when the predicted gear is inconsistent with an actual gear.

2. The method according to claim 1, wherein after determining that the predicted gear is inconsistent with the actual gear, the method further comprises: performing an intervention operation.

3. The method according to claim 1, wherein the first vehicle parameter comprises a driving status of the vehicle, and before determining the first scenario in which the vehicle is located, the method further comprises:
determining the driving status of the vehicle based on first vehicle information, wherein
the first vehicle information comprises a first speed and a first traveling distance of the vehicle, the first speed is a maximum speed of the vehicle after a latest gear shift from a P gear to another gear, and the first traveling distance is a traveling distance of the vehicle after the latest gear shift from the P gear to the another gear.

4. The method according to claim 3, wherein determining the driving status of the vehicle based on the first vehicle information comprises:
when the first speed is less than a first speed threshold and/or the first traveling distance is less than a first distance threshold, the driving status of the vehicle is a starting state.

5. The method according to claim 1, wherein the plurality of scenarios comprise a part or all of a scenario of starting with a height difference, a scenario of starting from a parking space, a scenario of maneuvering to start, a traffic-light vehicle following scenario, a closed-road section vehicle following scenario, and a narrow-road meeting scenario; and
the first vehicle parameter comprises a part or all of the following: a driving status of the vehicle, a location of the vehicle, and a speed of the vehicle, and the first environmental feature comprises a characteristic of an obstacle around the vehicle, wherein the characteristic of the obstacle comprises a part or all of the following: an orientation of the obstacle, a distance of the obstacle, a speed/relative speed of the obstacle, whether the obstacle is a height-difference obstacle, and a location of the obstacle.

6. The method according to claim 1, wherein the preset direction comprises front and rear, and the second environmental feature comprises a location of an obstacle in the preset direction of the vehicle; and
determining the passability of the vehicle in the preset direction based on the detected second environmental feature comprises:
determining a minimum turning radius and a turning center of the vehicle;
determining a minimum distance between an obstacle in a first preset direction and the turning center based on a location of the obstacle, wherein the first preset direction is front or rear; and
when the minimum distance is less than the minimum turning radius, the first preset direction is impassable; or when the minimum distance is greater than or equal to the minimum turning radius, the first preset direction is passable.

7. The method according to claim 1, wherein a first correspondence between different values of a plurality of decision parameters and gears is preset, and the plurality of decision parameters comprise the current scenario and the passability in the preset direction; and determining the predicted gear based on the current scenario and the passability in the preset direction comprises:
after values of the plurality of decision parameters are determined, determining, based on the first correspondence, a gear corresponding to the values of the plurality of decision parameters as the predicted gear.

8. The method according to claim 1, wherein the plurality of decision parameters further comprise a part or all of the following: a movement characteristic of a nearest obstacle within a seventh distance in the preset direction, and whether there is a height-difference obstacle within/outside a second distance in the preset direction.

9. The method according to claim 1, wherein a second correspondence between different values of a plurality of first decision parameters and first gears is preset, the plurality of first decision parameters comprise a part or all of the following: the current scenario, the passability in the preset direction, a movement characteristic of a nearest obstacle within a seventh distance in the preset direction, and whether there is a height-difference obstacle within/outside a second distance in the preset direction; and the first gear comprises a gear for moving forward or a gear for reversing; and
determining the predicted gear based on the current scenario and the passability in the preset direction comprises:
after values of the plurality of first decision parameters are determined, determining the first gear based on the first correspondence; and
when the first gear is the gear for reversing, the predicted gear is an R gear; or
when the first gear is the gear for moving forward, determining the predicted gear based on one or more second decision parameters.

10. The method according to claim 1, wherein the one or more second decision parameters comprise a part or all of the following: a slope of a road surface on which the vehicle is located, a length of a ramp whose slope is within a first slope range, whether a road surface in front is slippery, and whether traffic congestion occurs at a current location of the vehicle, and the gear for moving forward comprises a D gear, an S gear, and an L gear; and determining the predicted gear based on the one or more second decision parameters comprises:
when the slope is within the first slope range and the length of the ramp is less than or equal to a first value, determining that the predicted gear is the S gear; when the slope is within the first slope range and the length of the ramp is greater than a first value, or when the slope of the road surface on which the vehicle is located is within a second slope range, determining that the predicted gear is the L gear; when the road surface on which the vehicle is located is a slippery road surface, determining that the predicted gear is the S gear or the L gear; when traffic congestion occurs, determining that the predicted gear is the L gear; or in another case, determining that the predicted gear is the D gear, wherein a slope within the second slope range is greater than a slope within the first slope range.

11. The method according to claim 1, wherein performing the prompt operation comprises: outputting first audio by using a sound output apparatus, and/or displaying prompt information through a vehicle-mounted display; and
the first audio and the prompt information are used to prompt for one or more of the following information: the predicted gear, inconsistence between the predicted gear and the actual gear, a current risk of gear mis-shift, a traveling direction corresponding to the actual gear, and the like.

12. The method according to claim 1, wherein performing an intervention operation comprises one or more of the following: controlling the vehicle to decelerate, controlling the vehicle to perform braking, controlling the vehicle to automatically shift the gear to the predicted gear, controlling the vehicle to decelerate and then automatically shift the gear to a P gear/an N gear, increasing stepping resistance of an accelerator pedal, reducing an extent to which stepping on the accelerator pedal increases a speed of the vehicle, and controlling the accelerator pedal to be unable to be stepped on.

13. The method according to claim 1, wherein performing an intervention operation comprises:
after performing the prompt operation, if detecting that a driver behavior meets a first behavior condition, performing the intervention operation.

14. The method according to claim 1, wherein the predicted gear comprises a plurality of gears for moving forward and a gear for reversing; and performing an intervention operation comprises:
when a traveling direction corresponding to the predicted gear is inconsistent with that corresponding to the actual gear, after performing the prompt operation, if detecting that a driver behavior meets a first behavior condition, determining to perform the intervention operation.

15. The method according to claim 13 or 14, wherein the first behavior condition comprises:
within fourth preset duration after the prompt information is displayed, a line of sight of a driver gazes at a display area of the prompt information and/or a driver shifts a gear.

16. The method according to claim 1, wherein the second environmental feature comprises a distance of an obstacle in the preset direction of the vehicle, and the preset direction comprises front and rear; and
determining the passability of the vehicle in the preset direction based on the detected second environmental feature comprises:
when there is no obstacle within a sixth distance in a first preset direction, determining that the first preset direction is passable, wherein the first preset direction is front or rear; or
when there is an obstacle within the sixth distance in the first preset direction, determining a minimum distance of the obstacle in the first preset direction, wherein when the minimum distance is less than a safe distance threshold, the first preset direction is impassable, or when the minimum distance is greater than or equal to the safe distance threshold, the first preset direction is passable.

17. The method according to claim 1 or 5, wherein the first scenario is the scenario of starting with a height difference, the first vehicle parameter comprises the driving status of the vehicle, the first environmental feature comprises the distance of the obstacle around the vehicle, the orientation of the obstacle, and whether the obstacle is a height-difference obstacle, and the orientation of the obstacle indicates whether the obstacle is located in front of or in rear of the vehicle; and
the first scenario condition comprises: the driving status is a starting state, and there is a height-difference obstacle within a second distance in front of and in rear of the vehicle.

18. The method according to claim 1 or 5, wherein the first scenario is the scenario of starting from a parking space, the first vehicle parameter comprises the driving status of the vehicle, the first environmental feature comprises the distance of the obstacle around the vehicle, the orientation of the obstacle, and whether the obstacle is a height-difference obstacle, and the orientation of the obstacle indicates whether the obstacle is located in front of or in rear of the vehicle; and
the first scenario condition comprises: the driving status is a starting state, there is no height-difference obstacle within a second distance in front of and in rear of the vehicle, and there is no obstacle within a third distance in front of or in rear of the vehicle.

19. The method according to claim 1 or 5, wherein the first scenario is the scenario of maneuvering to start, the first vehicle parameter comprises the driving status of the vehicle, the first environmental feature comprises the distance of the obstacle around the vehicle, the orientation of the obstacle, and whether the obstacle is a height-difference obstacle, and the orientation of the obstacle indicates whether the obstacle is located in front of or in rear of the vehicle; and
the first scenario condition comprises: the driving status is a starting state, there is no height-difference obstacle within a second distance in front of and in rear of the vehicle, and there is an obstacle within a third distance in both the front and the rear of the vehicle.

20. The method according to claim 1 or 5, wherein the first scenario is the traffic-light vehicle following scenario, the first vehicle parameter comprises the driving status of the vehicle, the first environmental feature comprises the orientation of the obstacle, the distance of the obstacle, and a type of the obstacle, and the orientation of the obstacle indicates whether the obstacle is located in front of or in rear of the vehicle; and
the first scenario condition comprises: the driving status is not a starting state, and there is a traffic light/crosswalk within a fourth distance in front of or in rear of the vehicle.

21. The method according to claim 1 or 5, wherein the first scenario is a narrow-road meeting scenario, the first vehicle parameter comprises the driving status of the vehicle, the first environmental feature comprises a part or all of the following: the orientation of the obstacle, the distance of the obstacle, a type of the obstacle, and the speed/relative speed of the obstacle, the orientation of the obstacle indicates whether the obstacle is located in front of or in rear of the vehicle, the orientation of the obstacle and the distance of the obstacle indicate whether the obstacle is located in a straight-line area in front of the vehicle, and the speed/relative speed of the obstacle indicates whether the obstacle and the vehicle move in reverse directions; and
the first scenario condition comprises: the driving status is not a starting state, there is no traffic light/crosswalk within a fourth distance in front of and in rear of the vehicle, there is a first obstacle within a fifth distance of the straight-line area in front of the vehicle body, and the first obstacle and the vehicle move in reverse directions.

22. The method according to claim 1 or 5, wherein the first scenario is a closed-road section vehicle following scenario, the first vehicle parameter comprises the driving status of the vehicle, the first environmental feature comprises a part or all of the following: the orientation of the obstacle, the distance of the obstacle, a type of the obstacle, and the speed/relative speed of the obstacle, the orientation of the obstacle indicates whether the obstacle is located in front of or in rear of the vehicle, the orientation of the obstacle and the distance of the obstacle indicate whether the obstacle is located in a straight-line area in front of the vehicle, and the speed/relative speed of the obstacle indicates whether the obstacle and the vehicle move in reverse directions; and
the first scenario condition comprises: the driving status is not a starting state, there is no traffic light/crosswalk within a fourth distance in front of and in rear of the vehicle, and there is no obstacle within a fifth distance of the straight-line area in front of the vehicle body, or there is a first obstacle within a fifth distance of the straight-line area in front of the vehicle body and the first obstacle and the vehicle move in a same direction.

23. A gear processing apparatus, comprising a memory, one or more processors, and one or more programs, wherein the one or more programs are stored in the memory, and when the one or more processors execute the one or more programs, the access device is enabled to implement the method according to any one of claims 1 to 22.

24. A computer storage medium, comprising computer instructions, wherein when the computer instructions are run on an electronic device, the terminal is enabled to implement the method according to any one of claims 1 to 22.
